# EUROPEAN PATENT APPLICATION

(11) **EP 4 635 998 A1**
(43) Date of publication of application: **22.10.2025**
(21) Application number: 25170878.0
(22) Date of filing: 16.04.2025
(51) Int. Cl.: C08G 18/08, C08G 18/40, C08G 18/48, C08G 18/63, C08G 18/76, C08G 18/71

(54) **POLYMER POLYOLS, PROCESSES FOR THEIR PREPARATION, AND THE USE THEREOF TO PRODUCE POLYURETHANE FOAMS**

(30) Priority: 18.04.2024 US 202463635682 P
(71) Applicant: Covestro LLC, Pittsburgh, PA 15205-9741 (US)
(72) Inventor: ADKINS, Rick, Canonsburg, 15317 (US); LEE, Bin, Coraopolis, 15108-3257 (US); HAYES, John, Gibsonia, 15044-6053 (US)
(74) Representative: Levpat

(57) **Abstract**

Polymer polyols ("PMPOs"), processes for their production, and the use of such PMPOs, particularly in the production of flexible polyurethane foams. The PMPOs are produced using an ethylenically unsaturated composition that includes an ethylenically unsaturated compound comprising a reaction product of: (i) an amino alkyl urea having a tertiary amino group and a primary amino group; and (ii) an ethylenically unsaturated compound comprising a primary amine-reactive group.

## Description

### FIELD

This specification pertains to polymer polyols ("PMPOs"), processes for their production, and to their use, particularly in producing flexible polyurethane foams. The PMPOs comprise a reaction product of an ethylenically unsaturated composition, in which the ethylenically unsaturated composition comprise an ethylenically unsaturated compound that includes a tertiary amino group and a urea group.

### BACKGROUND

PMPOs are dispersions of polymer particles in a polyol, the polyol often being referred to as a base polyol. PMPOs are often used to prepare polyurethane foams, such as slabstock and molded flexible polyurethane foams. Slabstock flexible polyurethane foams are used in carpet, furniture and bedding applications, for example, while molded flexible polyurethane foams are commonly used in automotive applications. These flexible polyurethane foams are produced by reacting the PMPO with a polyisocyanate in the presence of a blowing agent and other ingredients, such as a tertiary amine catalyst.

PMPOs can be particularly useful for preparing foams with higher hardness levels than a conventional, unmodified, polyol can produce. In many cases, the base polyol used in the PMPO is a polyether polyol that is an alkoxylation reaction product of one or more H-functional starters and one or more alkylene oxides in which, due to the hydrophobic quality produced in the resulting polyether polyol, propylene oxide is often the primary or sole alkylene oxide employed.

A topic of concern with certain flexible polyurethane foams is VOC emissions, which has in particular become a considerable topic in the area of foams for automotive interiors, furniture, and bedding applications. Polyether polyols produced using propylene oxide can be susceptible to thermal oxidative degradation, which can produce a variety of VOCs, such as formaldehyde and acetaldehyde. This oxidative degradation can be particularly problematic at elevated temperatures. During polyurethane foam production, such as via a box foam process, foam bun temperatures can reach 160°C or more for extended periods of time.

Furthermore, polyurethane foam formulations often employ relatively low molecular weight tertiary amine catalysts, such as, for example, bis(2-dimethylaminoethyl) ether, that can be emitted from the polyurethane foam. In the case producing slabstock flexible polyurethane foams, for example, particularly those of relatively higher density, which require reduced content of water as blowing agent, the exothermic conditions experienced during foam formation may not be sufficient to volatize the tertiary amine catalyst. As a result, the catalyst may remain present in the foam and is thereafter emitted as a VOC therefrom.

A challenge related to PMPOs, particularly those of desirably high solids content, is viscosity. The viscosity of a PMPO should be sufficiently low for ease of handling during its manufacture. In addition, the viscosity should facilitate transport, handling and, ultimately, adequate processability, in the employed foam processing equipment, in which excessive PMPO viscosity can be a significant problem.

### SUMMARY

Inventions described in this specification relate to PMPOs that can be used in the production of flexible polyurethane foams, in which the PMPOs exhibit reduced VOC emissions, including reduced formaldehyde and acetaldehyde emissions, at elevated temperatures, such as 160°C, that may be experienced by the PMPO during foam production. In addition, such PMPOs can be used in the production of flexible polyurethane foam, such as slabstock flexible polyurethane foams, in which the PMPO itself exhibits catalytic activity, thereby enabling foam formulators to reduce the content of potentially volatile tertiary amine catalysts in the foam formulation. The PMPOs also maintain a sufficiently high solids content and sufficiently low viscosity to be commercially viable.

In certain respects, this specification relates to PMPOs. The PMPOs comprise: (a) a base polyol having a hydroxyl functionality of 2 to 8 and an OH number of 20 to 400 mg KOH/g polyol; and (b) polymer particles dispersed in the base polyol. The polymer particles comprise a reaction product of an ethylenically unsaturated composition, the ethylenically unsaturated composition comprising an ethylenically unsaturated compound of the structure (I): 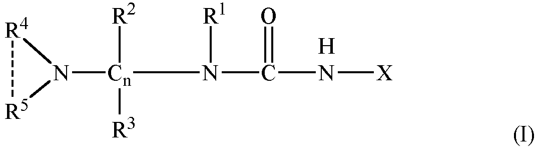 in which: (1) R¹ is hydrogen or the group 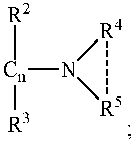 (2) each n is independently an integer having a value of 2 to 6; (3) each R² and R³, which may be the same or different, independently represents hydrogen or a C₁-C₆ alkyl group; (4) R⁴ and R⁵, which may be the same or different, each independently represent a C₁-C₆ alkyl group, a group NR, in which each R independently represents a C₁-C₆ alkyl group, or together represent a C₂-C₆ alkylene group which may contain one or more heteroatoms (such as oxygen); and (5) X represents the residue of an ethylenically unsaturated primary amine-reactive compound.

In other respects, this specification relates to PMPOs that comprise: (a) a base polyol having a functionality of 2 to 8 and an OH number of 20 to 400 mg KOH/g polyol; and (b) polymer particles dispersed in the base polyol. In these PMPOs, the polymer particles comprise a reaction product of a reaction mixture comprising an ethylenically unsaturated composition, the ethylenically unsaturated composition comprising an ethylenically unsaturated compound comprising a reaction product of reactants comprising: (i) an amino alkyl urea having a tertiary amino group and a primary amino group; and (ii) an ethylenically unsaturated compound comprising a primary amine-reactive group.

This specification also relates to, *inter alia,* processes for producing such PMPOs, polyurethane foam-forming compositions that include such PMPOs, polyurethane foams produced from such foam-forming compositions, and methods for producing such polyurethane foams.

### DETAILED DESCRIPTION

Various implementations are described and illustrated in this specification to provide an overall understanding of the structure, function, properties, and use of the disclosed inventions. It is understood that the various implementations described and illustrated in this specification are non-limiting and non-exhaustive. Thus, the invention is not limited by the description of the various non-limiting and non-exhaustive implementations disclosed in this specification. The features and characteristics described in connection with various implementations may be combined with the features and characteristics of other implementations. Such modifications and variations are intended to be included within the scope of this specification. As such, the claims may be amended to recite any features or characteristics expressly or inherently described in, or otherwise expressly or inherently supported by, this specification. Further, Applicant(s) reserve the right to amend the claims to affirmatively disclaim features or characteristics that may be present in the prior art. Therefore, any such amendments comply with the requirements of 35 U.S.C. § 112 and 35 U.S.C. § 132(a). The various implementations disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant(s) reserves the right to amend this specification to expressly recite any subject matter, or portion thereof, incorporated by reference herein.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described in the present description should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112 and 35 U.S.C. § 132(a).

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described implementations. Further, the use of a singular noun includes the plural, and the use of a plural noun includes the singular, unless the context of the usage requires otherwise.

As used herein, the term "functionality", when used with reference to a -OH functional material, refers to the average number of reactive hydroxyl groups (-OH) present per molecule of the -OH functional material being described. The term "hydroxyl number" or "OH number" of a polyol refers to the number of reactive hydroxyl groups available for reaction, and is expressed as the number of milligrams of potassium hydroxide equivalent to the hydroxyl content of one gram of the polyol (ASTM D4274-16). The term "equivalent weight" refers to the weight of a compound divided by its valence. For a polyol, the equivalent weight is the weight of the polyol that will combine with an isocyanate group, and may be calculated by dividing the molecular weight of the polyol by its functionality. The equivalent weight of a polyol may also be calculated by dividing 56,100 by the hydroxyl number of the polyol - Equivalent Weight (g/eq) = (56.1 x 1000)/OH number.

As used herein, "monomer" means the simple unpolymerized form of a chemical compound having relatively low molecular weight, e.g., acrylonitrile, styrene, methyl methacrylate, and the like.

As used herein, "ethylenically unsaturated compound" means a compound containing ethylenic unsaturation (C=C, *i.e.,* two double bonded carbon atoms) that is capable of undergoing free radically induced addition polymerization reactions.

As used herein, "pre-formed stabilizer" means an intermediate obtained by reacting a macromer containing reactive unsaturation (such as a (meth)acrylate, or maleate) with one or more monomers (such as acrylonitrile, styrene or methyl (meth)acrylate), with and at least one free radical initiator, in the presence of a polymer control agent (PCA) and, optionally, in a diluent, to give a copolymer (*i.e.* a dispersion having a relatively low solids content (such as <30%), or soluble grafts, etc.).

As used herein "viscosity" is in millipascal-seconds (mPa·s) measured at 25°C on an Anton Paar SVM3000 viscometer.

As used herein "(meth)acrylate" includes both acrylates and methacrylates.

As indicated, certain implementations of the present specification are directed to PMPOs that comprise a dispersion of polymer particles in a polyol, the polyol sometimes being referred to as a base polyol. In some embodiments, the PMPOs are sometimes characterized by a solids content, *i.e.,* content of polymer particles, of 30% by weight to 75% by weight, such as 35% by weight to 70% by weight, 40% by weight to 60% by weight, or 45% by weight to 55% by weight, based on the total weight of the PMPO. Moreover, in some implementations, the PMPO has a viscosity (as defined above) of less than 50,000 mPa·s, less than 40,000 mPa·s, less than 30,000 mPa·s, less than 20,000 mPa·s or, in some cases, less than 10,000 mPa·s.

Suitable base polyols include, for example, polyether polyols having a functionality of 2 to 8, such as 2 to 6 or 3 to 6, and an OH number of 20 to 400 mg KOH/g, 20 to 200 mg KOH/g, 20 to 150 mg KOH/g, 20 to 100 mg KOH/g, or, in some cases, 20 to 60 mg KOH/g, 25 to 60 mg KOH/g, or 30 to 60 mg KOH/g.

Specific examples of suitable base polyols include polyoxyethylene glycols, polyoxyethylene triols, polyoxyethylene tetrols and higher functionality polyoxyethylene polyols, polyoxypropylene glycols, polyoxypropylene triols, polyoxypropylene tetrols and higher functionality polypropylene polyols, mixtures thereof. When mixtures as used, the ethylene oxide and propylene oxide may be added simultaneously or sequentially to provide internal blocks, terminal blocks or random distribution of the oxyethylene groups and/or oxypropylene groups in the polyol. Suitable starters or initiators for these polyols include, for example, ethylene glycol, propylene glycol, diethylene glycol, dipropylene glycol, tripropylene glycol, trimethylolpropane, glycerol, pentaerythritol, sorbitol, sucrose, ethylenediamine, and toluene diamine, among others, including mixtures of any two or more thereof. The alkoxylation reaction may be catalyzed using any conventional catalyst including, for example, potassium hydroxide (KOH) or a double metal cyanide (DMC) catalyst.

Other suitable polyols for the base polyol of the PMPOs described herein include alkylene oxide adducts of non-reducing sugars and sugar derivatives, alkylene oxide adducts of phosphorus and polyphosphorus acids, alkylene oxide adducts of polyphenols, polyols prepared from natural oils such as, for example, castor oil, and alkylene oxide adducts of polyhydroxyalkanes other than those described above.

Illustrative alkylene oxide adducts of polyhydroxyalkanes include, for example, alkylene oxide adducts of 1,3-dihydroxypropane, 1,3-dihydroxybutane, 1,4-dihydroxybutane, 1,4-, 1,5- and 1,6-dihydroxyhexane, 1,2-, 1,3-, 1,4-1,6- and 1,8-dihydroxyoctant, 1,10-dihydroxydecane, glycerol, 1,2,4-tirhydroxybutane, 1,2,6-trihydroxyhexane, 1,1,1-trimethyl-olethane, 1,1,1-trimethylolpropane, pentaerythritol, caprolactone, polycaprolactone, xylitol, arabitol, sorbitol, and mannitol, among others, includes mixtures of any two or more thereof.

Other polyols which can be employed include the alkylene oxide adducts of non-reducing sugars, wherein the alkoxides have from 2 to 4 carbon atoms. Non-reducing sugars and sugar derivatives include sucrose, alkyl glycosides, such as methyl glycoside and ethyl glucoside, glycol glucosides, such as ethylene glycol glycoside, propylene glycol glucoside, glycerol glucoside, and 1,2,6-hexanetriol glucoside, as well as alkylene oxide adducts of the alkyl glycosides.

Other suitable base polyols include polyphenols, such as the alkylene oxide adducts thereof, wherein the alkylene oxides have, for examples, 2 to 4 carbon atoms. Suitable polyphenols include, for example, bisphenol A, bisphenol F, condensation products of phenol and formaldehyde, novolac resins, condensation products of various phenolic compounds and acrolein, including the 1,1,3-tris(hydroxy-phenyl)propanes, condensation products of various phenolic compounds and glyoxal, glutaraldehyde and other dialdehydes, including the 1,1,2,2-tetrakis(hydroxyphenol)ethanes.

Alkylene oxide adducts of phosphorus and polyphosphorus acid are also suitable base polyols, such as where the alkylene oxide includes ethylene oxide, 1,2-epoxy-propane, an epoxybutane, 3-chloro-1,2-epoxypropane, includes mixtures of any two or more thereof, and the acid includes phosphoric acid, phosphorus acid, a polyphosphoric acid, such as tripolyphosphoric acid, a polymetaphosphoric acid, including mixtures of any two or more thereof.

Of course, blends or mixtures of various useful polyols may be used if desired.

The polymer particles in the PMPOs of this specification comprise a reaction product of an ethylenically unsaturated composition, in which the ethylenically unsaturated composition comprises an ethylenically unsaturated compound of the structure (I): 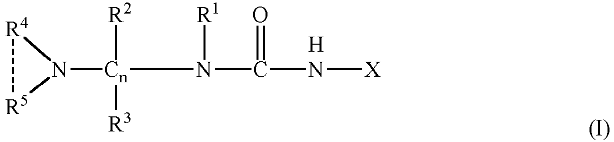 in which: R¹ is hydrogen or the group 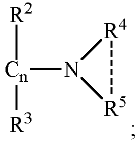 each n is independently an integer having a value of 2 to 6; each R² and R³, which may be the same or different, independently represents hydrogen or a C₁-C₆ alkyl group; R⁴ and R⁵, which may be the same or different, each independently represent a C₁-C₆ alkyl group, a group NR, in which each R independently represents a C₁-C₆ alkylgroup, or together represent a C₂-C₆ alkylene group which may contain one or more heteroatoms (such as oxygen); and X represents the residue of an ethylenically unsaturated primary amine-reactive compound. More particularly, in some implementations, each 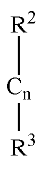 independently represents (CH₂)₃ or (CH₂)₂. In some implementations, R¹ represents hydrogen. In some implementations R⁴ and R⁵ each independently represent CH₃ or C₂H₅. In some cases, X comprises a urea group, an ester group, or, in some cases, a secondary amine alcohol group.

Such ethylenically unsaturated compounds can be prepared by reacting (i) an amino alkyl urea having a tertiary amino group and a primary amino group with (ii) an ethylenically unsaturated compound comprising a primary amine-reactive group. As a result, in some implementations of the PMPOs of this specification, the polymer particles comprise a reaction product of an ethylenically unsaturated composition comprising a reaction product of reactants comprising: (i) an amino alkyl urea having a tertiary amino group and a primary amino group; and (ii) an ethylenically unsaturated compound comprising a primary amine-reactive group.

Specifically, in some implementations, the amino alkyl urea having a tertiary amino group and a primary amino group comprises a compound of the structure (II): 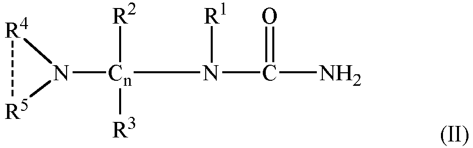 in which: (1) R¹ is hydrogen or the group 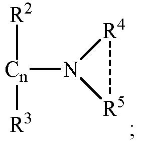 (2) each n is independently an integer having a value of 2 to 6; (3) R² and R³, which may be the same or different, each independently represent hydrogen or a C₁-C₆ alkyl group; and (4) R⁴ and R⁵, which may be the same or different, each independently represent a C₁-C₆ alkyl group, a group NR, in which R independently represents a C₁-C₆ alkyl group, or together represent a C₂-C₆ alkylene group, which may contain one or more heteroatoms (such as oxygen); In some implementations, each 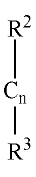 in structure (II) independently represents (CH₂)₃ or (CH₂)₂. In some implementations, R¹ in structure (II) represents hydrogen. In some cases, R⁴ and R⁵ in structure (II) each independently represent CH₃ or C₂H₅.

Some specific examples of amino alkyl ureas having a tertiary amino group and a primary amino group, which are suitable for use herein, are compounds of the following structures: 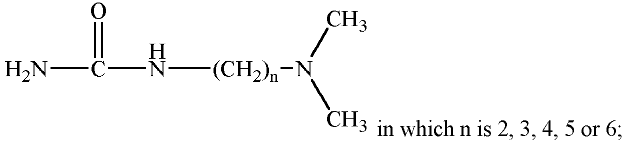 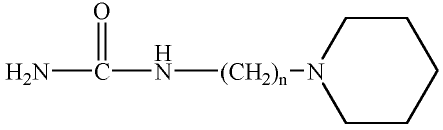 in which n is 2, 3, 4, 5 or 6; 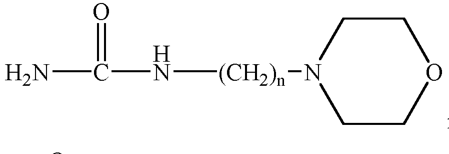 in which n is 2, 3, 4, 5 or 6; 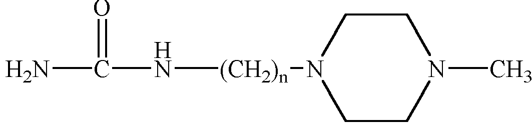 in which n is 2, 3, 4, 5 or 6; 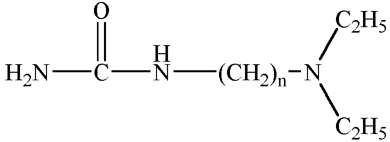 in which n is 2, 3, 4, 5 or 6; 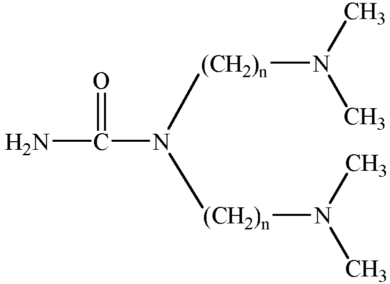 in which each n, which may be the same or different, is 2, 3, 4, 5, or 6; 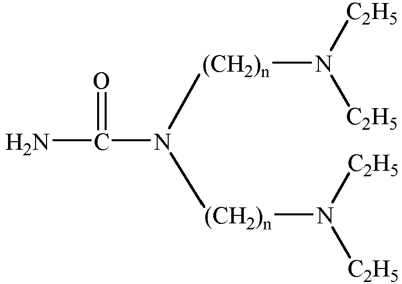 in which each n, which may be the same or different, is 2, 3, 4, 5, or 6; and combination of any two or more thereof.

As used herein, the term "ethylenically unsaturated compound comprising a primary amine-reactive group" refers to ethylenically unsaturated compounds that have a functional group that is reactive with a primary amine (-NH₂) group, examples of which include isocyanate groups, epoxy groups, and carboxylic acid groups (and derivatives of carboxylic acid groups). Specific examples of ethylenically unsaturated compounds comprising a primary amine-reactive group include, therefore, and without limitation, isocyanate-functional ethylenically unsaturated compounds, oxirane-functional ethylenically unsaturated compounds, and ethylenically unsaturated carboxylic acid anhydrides.

Suitable isocyanate-functional ethylenically unsaturated compounds include, without limitation, 3-isopropenyl-α,α-dimethylbenzyl-isocyanate, 4-isopropenyl-α,α-dimethylbenzyl-isocyanate, 2-propenoyl isocyanate, 2-methyl-2-propenoyl isocyanate, allyl isocyanate, methallyl isocyanate, isocyantoethyl (meth)acrylate, isocyanatopropyl (meth)acrylate, isocyanatobutyl (meth)acrylate, or a mixture of any two or more thereof. Other suitable isocyanate-functional ethylenically unsaturated compounds include adducts of (i) a monohydroxy-substituted monofunctional or multifunctional (meth)acrylate, and (ii) a polyisocyanate. Specific examples of suitable monohydroxy-substituted monofunctional and/or multifunctional (meth)acrylates include, without limitation, 2-hydroxyethyl (meth)acrylate, 2-hydroxyethyl 2-chloro acrylate, 2-hydroxyethyl 2-ethylacrylate, 2-hydroxyethyl 2-propylacrylate, 2-hydroxyethyl 2-butylacrylate, 3-hydroxypropyl methacrylate, 3-hydroxypropyl -2-propylacrylate, 2-hydroxypropyl acrylate, 3-hydroxypropyl 2-butylacrylate, 3-hydroxypropyl 2-bromo acrylate, 4-hydroxybutyl acrylate, 4-hydroxybutyl methacrylate, 3-hydroxybutyl 2-ethylacrylate, 4-hydroxybutyl 2-butylacrylate, 2-hydroxybutyl 2-propylacrylate, 4-hydroxybutyl 2-chloro acrylate, bis(methacryloyloxy)propanol, bis(acryloyloxy)propanol, pentaerythritol triacrylate, or a combination of any two or more thereof. Specific examples of suitable polyisocyanates for use in reacting with the monohydroxy-substituted monofunctional and/or multifunctional (meth)acrylate to form the isocyanate-functional ethylenically unsaturated compound include, without limitation, 2,4-tolylene diisocyanate, 2,6-tolylene diisocyanate, 1,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis(4-cyclohexylisocyanate), 2,2,4-trimethylhexamethylene diisocyanate, 2,4,4 trimethylhexamethylene diisocyanate, hexamethylene diisocyanate, bis(2-isocyanato-ethyl)fumarate, 6-isopropyl-1,3-phenyl diisocyanate, 4-diphenylpropane diisocyanate, hydrogenated diphenylmethane diisocyanate, hydrogenated xylylene diisocyanate, tetramethyl xylylene diisocyanate, lysine isocyanate, hexamethylene diisocyanate trimers (such as is commercially available as Desmodur^{®} N3300A from Covestro), triphenylmethane-4,4',4"-triisocyanate (such as is commercially available as Desmodur^{®} RE from Covestro), hexamethylene diisocyanate trimers (such as is commercially available as Desmodur^{®} N3200 from Covestro), aromatic polyisocyanates based on toluene diisocyanate (such as is commercially available as Desmodur^{®} IL BA from Covestro), polyisocyanurates of toluene diisocyanate (such as is commercially available as Desmodur^{®} RC from Covestro), or a combination of any two or more thereof.

Suitable oxirane-functional ethylenically unsaturated compounds include, without limitation, glycidyl (meth)acrylate, allyl glycidylether, vinyl glycidylether, vinyl cyclohexene oxide, limonene oxide, 2-ethylglycidyl(meth)acrylate, 2-(n-propyl)glycidyl(meth)acrylate, 2-(n-butyl)glycidyl(meth)acrylate, dimethylglycidyl methacrylate, glycidylmethylmethacrylate, glycidylacrylate, 2,3-epoxybutyl methacrylate, (3',4'-epoxyheptyl)-2-ethyl(meth)acrylate, (6',7'-epoxyheptyl)(meth)acrylate, allyl-3,4-epoxyheptylether, 6,7-epoxyheptylallylether, vinyl-3,4-epoxyheptylether, 3,4-epoxyheptylvinylether, 6,7-epoxyheptylvinylether, o-vinylbenzylglycidylether, m-vinylbenzylglycidylether, p-vinylbenzylglycidylether, 3-vinyl cyclohexene oxide, α-methyl glycidyl methacrylate, 3,4-epoxycyclohexylmethyl (meth)acrylate, (3-methyloxiran-2-yl) methyl 2-methacrylate, styrene glycidyl ether, 2, 4-vinylphenyl glycidyl ether, or a combination of any two or more thereof.

Suitable ethylenically unsaturated carboxylic acid anhydrides include, without limitation, maleic anhydride, itaconic anhydride; citraconic anhydride; aconitic anhydride; bicyclo[2.2.2]oct-7-ene-2,3,5,6-tetracarboxylic dianhydride; crotonic anhydride;1-cyclopentene-1,2-dicarboxylic anhydride; methacrylic anhydride; as well as combinations of any two or more thereof.

Ethylenically unsaturated compounds of structure (I) can be prepared, for example, by reaction of the an amino alkyl urea having a tertiary amino group and a primary amino group with the ethylenically unsaturated compound comprising a primary amine-reactive group at a temperature of for example, 80°C to 150°C, such as 100°C to 130°C.

In some implementations, the ethylenically unsaturated compound of structure (I) is present in an amount of 0.1 to 10% by weight, such as 0.1 to 5% by weight, 1 to 5% by weight, or 1 to 3% by weight, based on the total weight of the ethylenically unsaturated composition.

Other ethylenically unsaturated compounds suitable for use in the ethylenically unsaturated composition include, for example, other aliphatic conjugated dienes, such as butadiene and isoprene, monovinylidene aromatic monomers, such as styrene, α-methyl-styrene, (t-butyl)styrene, chlorostyrene, cyanostyrene and bromostyrene; α,β-ethylenically unsaturated carboxylic acids and esters thereof, such as acrylic acid, methacrylic acid, methyl (meth)acrylate, ethyl (meth)acrylate, 2-hydroxyethyl (meth)acrylate, butyl (meth)acrylate, itaconic acid, and maleic anhydride, α,β-ethylenically unsaturated nitriles and amides, such as acrylonitrile, methacrylonitrile, acrylamide, methacrylamide, N,N-dimethyl acrylamide, and N-(dimethylaminomethyl)-acrylamide, vinyl esters, such as vinyl acetate, vinyl ethers, vinyl ketones, and vinyl and vinylidene halides, among others. Of course, mixtures of two or more of the aforementioned monomers are also suitable. In some embodiments, the ethylenically unsaturated composition comprises at least one of styrene and its derivatives, acrylonitrile, methyl acrylate, methyl methacrylate, and vinylidene chloride.

In some embodiments, the ethylenically unsaturated composition comprises styrene and acrylonitrile. More specifically, in some implementations, styrene and acrylonitrile are used in sufficient amounts such that the weight ratio of styrene to acrylonitrile (S:AN) is within the range of 80:20 to 20:80, such as 75:25 to 25:75. Moreover, in some implementation, the combination of the amount of styrene and acrylonitrile in the ethylenically unsaturated composition is of 90 to 99.9% by weight, such as 95 to 99.9% by weight, 95 to 99% by weight, or 97 to 99% by weight, based on the total weight of the ethylenically unsaturated composition.

In addition to the base polyol and the ethylenically unsaturated composition, the reaction mixture used to produce the PMPO may contain other components.

For example, in some implementations, a pre-formed stabilizer is present in the reaction mixture used to produce the PMPO. More specifically, in some implementations, the pre-formed stabilizer comprises the reaction product of a reaction mixture comprising: (a) a macromer that contains reactive unsaturation, (b) an ethylenically unsaturated compound, (c) a free radical initiator, (d) a polymer control agent; and, in some cases, (e) a chain transfer agent.

In some implementations, the macromer utilized to produce the pre-formed stabilizer comprises the reaction product of a reaction mixture comprising: (i) an H-functional starter having a functionality of 2 to 8 and a hydroxyl number of 20 to 50 mg KOH/g polyol; (ii) 0.1 to 3% by weight, based on 100% by weight of the sum of components (i), (ii) and (iii), of a hydroxyl-reactive compound that contains reactive unsaturation; and (iii) 0 to 3% by weight, such as 0.05 to 2.5% by weight, or 0.1 to 1.5% by weight, based on 100% by weight of the sum of components (i), (ii) and (iii), of a diisocyanate.

Suitable pre-formed stabilizers can be prepared by reacting a combination of components (a), (b), (c) and (d), and optionally, (e), as described above, in a reaction zone maintained at a temperature sufficient to initiate a free radical reaction, and under sufficient pressure to maintain only liquid phases in the reaction zone, for a sufficient period of time to react (a), (b) and (c); and recovering a mixture containing the pre-formed stabilizer dispersed in the polymer control agent.

Suitable starters for use in preparing the macromer include compounds having a hydroxyl functionality of 2 to 8, such as 3 to 6, and a hydroxyl number of 20 mg KOH/g to 50 polyol, such as 25 to 40 mg KOH/g polyol. A specific example of a suitable starter is an alkylene oxide adduct of a hydroxyl functional compound, such as ethylene glycol, propylene glycol, diethylene glycol, dipropylene glycol, tripropylene glycol, glycerin, trimethylolpropane, pentaerythritol, sorbitol, ethylenediamine, and toluene diamine, among others, including mixtures of any two or more thereof, in which the alkylene oxide comprises, for example, propylene oxide, ethylene oxide, butylene oxide, or styrene oxide, among others, including mixtures of any two or more thereof. When a mixture of alkylene oxides are used to form the starter, a mixture of propylene oxide and ethylene oxide may be advantageous. Such mixtures may be added simultaneously (*i.e.* two or more alkylene oxide are added as co-feeds), or sequentially (one alkylene oxide is added first, and then another alkylene oxide is added). It is possible to use a combination of simultaneous and sequential addition of alkylene oxides. In one embodiment, an alkylene oxide such as propylene oxide may be added first, and then a second alkylene oxide such as ethylene oxide added as a cap.

Other examples of suitable starters for preparing the macromer are polyoxyethylene glycols, triols, tetrols and higher functionality polyols, and mixtures thereof, as well as alkylene oxide adducts of non-reducing sugars and sugar derivatives, alkylene oxide adducts of phosphorus and polyphosphorus acids, alkylene oxide adducts of polyphenols, polyols prepared from natural oils such as, for example, castor oil, and alkylene oxide adducts of polyhydroxyalkanes other than those described above. Illustrative alkylene oxide adducts of polyhydroxyalkanes include, for example, alkylene oxide adducts of 1,3-dihydroxypropane, 1,3-dihydroxybutane, 1,4-dihydroxybutane, 1,4-, 1,5- and 1,6-dihydroxyhexane, 1,2-, 1,3-, 1,4-1,6- and 1,8-dihydroxyoctant, 1,10-dihydroxydecane, glycerol, 1,2,4-tirhydroxybutane, 1,2,6-trihydroxyhexane, 1,1,1-trimethyl-olethane, 1,1,1-trimethylolpropane, pentaerythritol, caprolactone, polycaprolactone, xylitol, arabitol, sorbitol, and mannitol. Specific examples of alkylene oxide adducts of non-reducing sugars, include those where the alkoxides have from 2 to 4 carbon atoms. Non-reducing sugars and sugar derivatives include sucrose, alkyl glycosides, such as methyl glycoside and ethyl glucoside, glycol glucosides, such as ethylene glycol, glycoside, propylene glycol glucoside, glycerol glucoside, and 1,2,6-hexanetriol glucoside, and alkylene oxide adducts of the alkyl glycosides. Other suitable polyols starters for preparing the macromer include polyphenols, such as alkylene oxide adducts thereof, wherein the alkylene oxides have from 2 to 4 carbon atoms. Suitable polyphenols include, for example bisphenol A, bisphenol F, condensation products of phenol and formaldehyde, the novolac resins, condensation products of various phenolic compounds and acrolein, including the 1,1,3-tris(hydroxy-phenyl)propanes, condensation products of various phenolic compounds and glyoxal, glutaraldehyde, other dialdehydes, including the 1,1,2,2-tetrakis (hydroxyphenol)ethanes.

In some implementations, the starter used to prepare the macromer has a functionality of from 3 to 6 and a hydroxyl number of from 25 to 40 mg KOH/g polyol, and is prepared by reacting a starter such as glycerin, trimethylolpropane, pentaerythritol, dipentaerythritol, sorbitol, mannitol, or a mixture of any two or more thereof, with an alkylene oxide comprising propylene oxide and/or ethylene oxide. In some of these embodiments, ethylene oxide is utilized in an amount of 1 to 40% by weight, such as 5 to 30% by weight or 10 to 25% by weight, based on the total weight of the starter compound. In some embodiments, all or a portion of the ethylene oxide is added as a cap on the end of the starter compound. Suitable amounts of ethylene oxide to be added as a cap range from, for example, 1 to 40% by weight, such as 3 to 30% by weight or 5 to 25% by weight, based on the total weight of starter.

As indicated earlier, in some implementations, the reaction mixture used to produce the macromer utilized to produce the pre-formed stabilizer also comprises a hydroxyl-reactive compound that contains reactive unsaturation. Suitable such compounds include, for example, methyl methacrylate, ethyl methacrylate, maleic anhydride, isopropenyl dimethyl benzyl isocyanate, 2-isocyanatoethyl methacrylate, adducts of isophorone diisocyanate and 2-hydroxyethyl methacrylate, and adducts of toluenediisocyanate and 2-hydroxypropyl acrylate, including mixtures of any two or more thereof.

As also indicated earlier, in some implementations, the reaction mixture used to produce the macromer utilized to produce the pre-formed stabilizer may also comprise a diisocyanate. Suitable diisocyanates include various isomers of diphenylmethane diisocyanate and isomeric mixtures of diphenylmethane diisocyanate, such as, for example, mixtures of 2,4'-diphenylmethane diisocyanate, 4,4'-diphenylmethane diisocyanate and/or 2,2'-diphenyl-methane diisocyanate. Other suitable isocyanates include toluenediisocyanate, isophoronediisocyanate, hexamethylenediisocyanate, and 4,4'-methylenebis(cyclohexyl isocyanate), among others, includes mixtures of any two or more thereof.

In certain implementations, the macromer is used in an amount of 10 to 40% by weight, such as 15 to 35% by weight, based on the total weight of the reaction mixture used to produce the preformed stabilizer.

As previously mentioned, in some implementations, the reaction mixture used to form the pre-formed stabilizer used to produce the PMPO also comprises an ethylenically unsaturated compound. Suitable such ethylenically unsaturated compounds are aliphatic conjugated dienes, such as butadiene and isoprene, monovinylidene aromatic monomers such as styrene, α-methylstyrene, (t-butyl)styrene, chlorostyrene, cyanostyrene and bromostyrene, α,β-ethylenically unsaturated carboxylic acids and esters thereof, such as acrylic acid, methacrylic acid, methyl (meth)acrylate, ethyl (meth)acrylate, 2-hydroxyethyl (meth)acrylate, butyl (meth)acrylate, itaconic acid, maleic anhydride and the like, α,β-ethylenically unsaturated nitriles and amides, such as acrylonitrile, methacrylonitrile, acrylamide, methacrylamide, N,N-dimethyl acrylamide, N-dimethylaminomethyl)acryl-amide and the like, vinyl esters, such as vinyl acetate; vinyl ethers, vinyl ketones, vinyl and vinylidene halides, as well as a wide variety of other ethylenically unsaturated materials which are copolymerizable with the macromer, including mixtures of any two or more thereof.

In some implementations, the reaction mixture used to form the pre-formed stabilizer used to produce the PMPO comprises an ethylenically unsaturated monomer comprising a mixture of acrylonitrile and at least one other ethylenically unsaturated comonomer which is copolymerizable with acrylonitrile, such as, for example, styrene and its derivatives, acrylates, methacrylates, such as methyl methacrylate, vinylidene chloride, among others, as well as mixtures of any two or more thereof. When using acrylonitrile with a comonomer, it is sometimes desirable that a minimum of 5 to 15% by weight acrylonitrile be maintained in the system. One specific ethylenically unsaturated monomer mixtures suitable for making the pre-formed stabilizer comprises mixtures of acrylonitrile and styrene in which, for example, acrylonitrile is used in an amount of 20 to 80% by weight, such as 30 to 70% by weight, based on the total weight of the monomer mixture, and styrene is used in an amount of 80 to 20% by weight, such as 70 to 30% by weight percent, based on the total weight of the monomer mixture. In some cases, the ethylenically unsaturated composition used to make the pre-formed stabilizer consists of only monofunctional monomers, such as styrene and/or acrylonitrile.

In certain implementations, the ethylenically unsaturated compound is used in an amount of 10 to 30% by weight, such as 15 to 25% by weight, based on the total weight of the reaction mixture used to produce the pre-formed stabilizer.

The reaction mixture used to produce the pre-formed stabilizer, in some implementations, also include a free radical initiator. Exemplary suitable free-radical initiators include peroxides, including both alkyl and aryl hydro-peroxides, persulfates, perborates, percarbonates, and azo compounds. Some specific examples include hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis(isobutyronitrile), and 2,2'-azo bis-(2-methylbutyronitrile). In some cases, the catalyst selected is one having a half-life that is 25 percent or less of the residence time in the reactor at a given temperature. Representative examples of useful initiators species include t-butyl peroxy-2-ethyl-hexanoate, t-butylperpivalate, t-amyl peroctoate, 2,5-dimethyl-hexane-2,5-di-per-2-ethyl hexoate, t-butylperneodecanoate, and t-butylperbenzoate, as well as azo compounds, such as azobisisobutyronitrile, 2,2'-azo bis-(2-methylbutyro-nitrile), and mixtures thereof.

In some implementations, the free radical initiator is used in an amount of 0.01 to 2% by weight, such as 0.05 to 1% by weight or 0.05 to 0.3% by weight, based on the total weight of the reaction mixture used to produce the pre-formed stabilizer.

The reaction mixture used to produce the pre-formed stabilizer, in some implementations, also include a polymer control agent. Suitable polymer control agents include various mono-ols (i.e. monohydroxy alcohols), aromatic hydrocarbons, and ethers. Specific examples of suitable polymer control agents are alcohols containing at least one carbon atom, such as methanol, ethanol, n-propanol, isopropanol, n-butanol, sec.-butanol, t-butanol, n-pentanol, 2-pentanol, 3-pentanol, and the like, and mixtures of any two or more thereof. Other suitable polymer control agents include ethylbenzene and toluene. The polymer control agent can be used in substantially pure form (i.e. as commercially available) or can be recovered in crude form from the PMPO production process and reused as-is. For instance, if the polymer control agent is isopropanol, it can be recovered from the PMPO process and used at any point in a subsequent product campaign in which the isopropanol is present.

In certain implementations, the polymer control agent is used in an amount of 30 to 80% by weight, such as 40 to 70% by weight, based on the total weight of the reaction mixture used to produce the pre-formed stabilizer.

As previously indicated, the reaction mixture used to produce the pre-formed stabilizer, in certain implementations, may also include a chain transfer agent. Suitable chain transfer agents include alkylene oxide adducts having a hydroxyl functionality of greater 3. In some implementations, the chain transfer agent is the same as or equivalent to the polyol used in the formation of precursor used to prepare the pre-formed stabilizer. In certain implementations, the chain transfer agent is used in an amount of 0 to 40% by weight, such as 0 to 20% by weight, or, in some cases, 0 to 10% by weight, based on the total weight of the reaction mixture used to produce the pre-formed stabilizer.

The pre-formed stabilizer can be produced by a process similar to that of making the PMPO. The temperature range is not critical and may vary from, for example, 80°C to 150°C, such as 115°C to 125°C. The mixing conditions employed can, for example, be those obtained using a back mixed reactor (such as a stirred flask or stirred autoclave).

As indicated earlier, the reaction mixture used to produce certain implementations of the PMPO also comprises a free radical initiator. Suitable such free-radical initiators include, for example, any of those described previously with respect to the production of the pre-formed stabilizer. In certain implementations, the free-radical initiator is present in the reaction mixture used to produce the PMPO in an amount of 0.01 to 2% by weight, based on 100% by weight of the final PMPO.

In some implementations, the reaction mixture used in preparing the PMPO further comprises a chain transfer agent. Examples of suitable chain transfer agents are mercaptans, such as dodecane thiol, ethane thiol, octane thiol, and toluene thiol, halogenated hydrocarbons, such as carbon tetrachloride, carbon tetrabromide, and chloroform, amines, such as diethylamine, and enol-ethers. In some embodiments, if used, the chain transfer agent is used in an amount of 0.1 to 2% by weight, such as 0.2 to 1% by weight, based on the total weight of the reaction mixture used to produce the PMPO.

The foregoing PMPOs can be made using any process (including continuous and semibatch) and reactor configuration that is known to be suitable to prepare PMPO, such as, for example, a two-stage reaction system comprising a continuously-stirred tank reactor (CSTR) fitted with impeller(s) and baffles (first-stage) and a plug-flow reactor (second stage). Furthermore, the reaction system can utilize a wide range of mixing conditions. The reaction system may be characterized by energy inputs of from 0.5 to 350 horsepower per 1000 gallons, such as 2 to 50 horsepower per 1000 gallons on average for the bulk phase volume of each reactor as a particularly useful mixing power input. Mixing can be provided by any combination of impeller(s) and pump-around loop/jet mixing. In addition, such PMPOs can be prepared from various types and combinations of axially and/or radially/tangentially acting impellers including, but not limited to, 4-pitched-blade, 6-pitched-blade, 4-flat-blade, 6-flat-blade, pitched-blade turbine, flat-blade turbine, Rushton, Maxflow, propeller, etc. For a continuous production process to prepare PMPOs, a residence time ranging of 20 to 180 minutes for the first reactor may be particularly useful.

In some implementations, the one or more of the feeds to the reactor are pumped from feed tanks through an in-line static mixer, and then, through a feed tube into the reactor. It may be particularly useful to prepare a premix of the initiator with part of the polyol stream, as well as of polyol and stabilizer. In general, feed stream temperatures are ambient (i.e. 25°C). However, if desired, feed streams can be heated prior to mixing and entering the reactor. Other process conditions, which may be useful, include cooling of the feed tube in the reactor. Furthermore, the suitable reaction conditions for PMPOs in general may be characterized by a reaction temperature in the range of 80 to 200°C and a pressure in the range of 20 to 80 psig. Typically, the product can then treated in a single or multi staged stripping step to remove volatiles before entering a stage, which can essentially be any combination of filtration and/or product cooling.

In many cases, the PMPO is produced by utilizing a low monomer to polyol ratio which is maintained throughout the reaction mixture during the process. This can be achieved by employing conditions that provide rapid conversion of monomer to polymer. In practice, a low monomer to polyol ratio is maintained, in the case of semi-batch and continuous operation, by control of the temperature and mixing conditions and, in the case of semibatch operation, also by slowly adding the monomers to the polyol. The temperature range is not critical and may vary from, for example, 80°C to 200°C, 100°C to 140°C, or, in some cases, 115°C to 125°C.

One suitable continuous process for making PMPOs of this specification comprises (1) providing a heterogenous mixture of the pre-formed stabilizer and, optionally, liquid diluent, in combination with base polyol, the ethylenically unsaturated composition, and a free radical polymerization initiator, and (2) feeding the mixture to a reaction zone maintained at a temperature sufficient to initiate a free radical reaction, and under sufficient pressure to maintain only liquid phases in the reaction zone, (3) maintaining the mixture in the reaction zone for a period of time sufficient to react at least a major portion of the ethylenically unsaturated composition to form a heterogenous mixture containing an enhanced PMPO, unreacted monomers and diluent, and (4) stripping the unreacted monomers and diluent from the enhanced PMPO to recover the unreacted monomers and diluent.

In some implementations, the polymer particles (whether individual particles or agglomerates of individual particles) are relatively small in size and, in some cases, have a weight average diameter less than ten microns.

Following polymerization, volatile constituents, in particular those from the polymer control agent and residues of monomers are generally stripped from the product by, for example, vacuum distillation, such as in a thin layer of a falling film evaporator. The monomer-free product may be used as is, or may be filtered to remove any large particles that may have been created. In some cases, all of the product will pass through the filter employed in the 150 mesh filtration hindrance test.

It has been observed, surprisingly, that PMPOs of this specification can exhibit reduced VOC emissions, including reduced formaldehyde and acetaldehyde emissions at elevated temperatures (such as 160°C), without negatively impacting PMPO viscosity and, in some cases even reducing PMPO viscosity, at consistent solids content relative to similar PMPOs produced without using an ethylenically unsaturated compound of structure (I). Moreover, since the ethylenically unsaturated compound of structure (I) is reacted into and becomes part of the polymer particles of the PMPO, the tertiary amine contained therein can act as a catalyst during foam production that itself cannot be detected as a VOC.

Certain embodiments of this specification are, therefore, directed to polyurethane foams produced using the PMPOs produced as described above, as well to methods of manufacturing such polyurethane foam. As will be appreciated, polyurethane foams can be produced from reacting a reaction mixture comprising: (1) a polyisocyanate and (2) an isocyanate-reactive component. The isocyanate-reactive component may comprise any of the PMPOs described herein. In addition, the isocyanate-reactive component may include: (i) other polyols, such as a polyether polyol having a functionality of from 2 to 6, an OH number of from 18 to 238, and a number average molecular weight of from 160 to 8000, (ii) a blowing agent, (iii) another catalyst, such as a tertiary amine catalyst, and (iv) a surfactant.

As used herein, the term "polyisocyanate" includes diisocyanates as well as polyisocyanates having an isocyanate functionality of more than 2.0. Suitable polyisocyanates include, without limitation, 2,4- and 2,6-toluylene diisocyanate and any desired mixtures of these isomers ("TDI"); polyphenylpolymethylene polyisocyanates, such as those prepared by aniline-formaldehyde condensation followed by phosgenation ("crude MDI"); and polyisocyanates having carbodiimide groups, urethane groups, allophanate groups, isocyanurate groups, urea groups or biuret groups (sometimes referred to as "modified polyisocyanates"), such as modified polyisocyanates derived from 2,4- and/or 2,6-toluylene diisocyanate or from 4,4'- and/or 2,4'-diphenylmethane diisocyanate. In some implementations, the polyisocyanate comprises 2,4- and/or 2,6-toluylene diisocyanate, 4,4'-, 2,4'- and/or 2,2'-diphenylmethane diisocyanate, or a polyphenylpolymethylene polyisocyanate ("polynuclear MDI", such as where the polyisocyanate comprises a mixture comprising 4,4'-diphenylmethane diisocyanate, 2,4'-diphenylmethane diisocyanate and polyphenylpolymethylene polyisocyanate

Suitable blowing agents include halogenated hydrocarbons, halogenated olefins, water, liquid carbon dioxide, low boiling solvents such as, for example, pentane, and other known blowing agents. In some embodiments, the blowing agent comprises, or consists of, water. In certain implementations, blowing agent is used in an amount of 1 to 7 parts, such as 1 to 5 parts, by weight, based on the total weight of the isocyanate-reactive component.

Suitable catalysts include amine and tin based catalysts, such as diethylenetriamine, triethylenediamine, bis(2,2'-di-methylamino)ethyl ether, N,N,N',N",N"-pentamethyldiethylenetriamine, dibutyltin dilaurate, dibutyltin diacetate, and stannous octoate, and the like. In certain implementations, catalyst is used in an amount of 0.001 to 2 parts by weight, based on the total weight of the polyol composition.

As indicated earlier, since the ethylenically unsaturated compound of structure (I) itself contains a tertiary amine group, the resulting polymer particles can act as a tertiary amine catalyst during polyurethane foam production. In fact, it has been discovered, surprisingly, that the content of relatively low molecular weight tertiary amine catalysts, such as, for example, bis(2-dimethylaminoethyl) ether, can be significantly reduced (such as by more than 50%) in a foam-forming composition, without negatively impacting the reactivity profile of the composition. It is believed, therefore, that use of the PMPOs of this specification can enable foam formulators to significantly reduce the content of potentially volatile tertiary amine catalysts in a foam formulation without negatively impacting other reactivity properties of the formulation.

In addition, the isocyanate-reactive component may, if desired, include a low molecular weight chain extender and/or cross-linking agent which has a molecular weight of, for example, below 300 Da. Examples include, but are not limited to, glycerine, pentaerythritol, ethylene glycol, sorbitol, and alkanolamines, such as monoethanolamine, diethanolamine (DEOA) and triethanolamine (TEOA). In certain implementations, such chain extender and/or cross-linking agent is used in an amount of up to 5 parts per by weight, such as 0.4 to 3.5 parts by weight, based on the total weight of the isocyanate-reactive component.

Suitable surfactants include, but are not limited to, commercially available polyetherpolysiloxane foam stabilizers.

If desired, the reaction mixture may include any of a variety of additional ingredients/additives, such as flame retardants, antioxidants, pigments, dyes, liquid and solid fillers, and many other commercial additives can also be included in the foams in conventional amounts.

This specification also relates to foams prepared from the foregoing reaction mixtures, as well as to methods of producing such foams. Suitable foam preparation methods include continuous or discontinuous free-rise slabstock foam processes and molded foam processes.

In a continuous slabstock process, the isocyanate is continuously mixed together with the other formulation chemicals by passing through a mixing head and then into a trough which overflows onto a moving conveyor. Alternatively, the reaction mixture is deposited directly onto the moving conveyor. In another embodiment, high pressure liquid carbon dioxide is fed into one or more of the formulation components, typically the polyol, entering into the mixing head and the resin blend is passed through a frothing device where the pressure is let down and the resultant froth is deposited onto the conveyor. The foam expands and rises as it moves down the conveyor to form a continuous foam slab that is cut into blocks or buns of the desired length for curing and storage. After curing for one or more days, these foam buns can be cut into the desired shapes for the end-use applications.

In the discontinuous process, the reactants are quickly mixed together through a head or in a large mixing chamber. The reaction mixture is then deposited into a container, such as a large box, where foam expansion occurs to form a bun of the lateral dimensions of the container.

A molded foam process usually employs a one-shot approach in which a specific amount of the isocyanate stream (the "A" side) is rapidly combined and mixed with a specific amount of the remaining formulation components (the "B" side). An additional stream may be employed to bring in one or more specific components not included with the "B" side stream. The mixture is quickly deposited into a mold that is then closed. The foam expands to fill the mold and produce a part with the shape and dimensions of the mold.

The polyurethane foam can be prepared by reacting the polyisocyanate component with the isocyanate-reactive component, wherein the polyisocyanate component is present in an amount sufficient to, for example, provide an isocyanate index of 70 to 130, such as 80 to 120 or 90 to 115.

Various aspects of the subject matter described herein are set out in the following numbered clauses:
Clause 1. A polymer polyol (PMPO) comprising: (a) a base polyol having a hydroxyl functionality of 2 to 8 and an OH number of 20 to 400 mg KOH/g polyol; and (b) polymer particles dispersed in the base polyol, wherein the polymer particles comprise a reaction product of a reaction mixture comprising an ethylenically unsaturated composition, the ethylenically unsaturated composition comprising an ethylenically unsaturated compound of the structure (I): 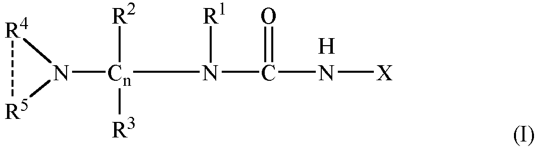 in which: (1) R¹ is hydrogen or the group 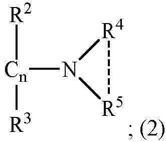 each n is independently an integer having a value of 2 to 6; (3) R² and R³, which may be the same or different, each independently represent hydrogen or a C₁-C₆ alkyl group; and (4) R⁴ and R⁵, which may be the same or different, each independently represent a C₁-C₆ alkyl group, a group NR, in which each R independently represents a C₁-C₆ alkyl group, or together represent a C₂-C₆ alkylene group, which may contain one or more heteroatoms (such as oxygen); and (5) X represents the residue of an ethylenically unsaturated primary amine-reactive compound.
Clause 2. The PMPO of clause 1, wherein the PMPO has a solids content of 30 to 75% by weight, 35 to 70% by weight, 40 to 60% by weight, or 45 to 55% by weight, based on the total weight of the PMPO.
Clause 3. The PMPO of clause 1 or clause 2, wherein the PMPO has a viscosity of less than 50,000 mPa·s, less than 40,000 mPa·s, less than 30,000 mPa·s, less than 20,000 mPa·s or less than 10,000 mPa·s.
Clause 4. The PMPO of one of clause 1 to clause 3, wherein the base polyol has a functionality of 2 to 6 or 3 to 6, and/or an OH number of 20 to 200 mg KOH/g, 20 to 150 mg KOH/g, 20 to 100 mg KOH/g, or, in some cases, 20 to 60 mg KOH/g, 25 to 60 mg KOH/g, or 30 to 60 mg KOH/g.
Clause 5. The PMPO of one of clause 1 to clause 4, wherein the base polyol comprises a polyoxyethylene glycol, a polyoxyethylene triol, a polyoxyethylene tetrol, a higher functionality polyoxyethylene polyol, a polyoxypropylene glycol, a polyoxypropylene triol, a polyoxypropylene tetrol, a higher functionality polypropylene polyol, or a mixture of any two or more thereof.
Clause 6. The PMPO of one of clause 1 to clause 5, wherein the unit 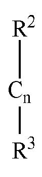 in structure (I) represents (CH₂)₃ or (CH₂)₂.
Clause 7. The PMPO of one of clause 1 to clause 6, wherein R¹ in structure (I) represents hydrogen.
Clause 8. The PMPO of one of clause 1 to clause 7, wherein R⁴ and R⁵ in structure (I) each represent CH₃ or C₂H₅.
Clause 9. The PMPO of one of clause 1 to clause 8, wherein X in structure (I) comprises a urea group, an ester group, or a secondary amine alcohol group.
Clause 10. The PMPO of one of clause 1 to clause 9, wherein the ethylenically unsaturated compound of the structure (I) is a reaction product of reactants comprising: (i) an amino alkyl urea having a tertiary amino group and a primary amino group; and (ii) an ethylenically unsaturated compound comprising a primary amine-reactive group.
Clause 11. The PMPO of clause 10, wherein the amino alkyl urea having a tertiary amino group and a primary amino group comprises a compound of the structure (II): 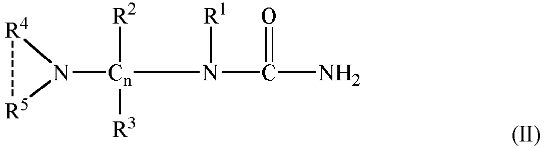 in which: (1) R¹ is hydrogen or the group 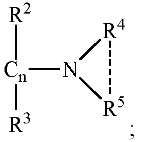 (2) each n is independently an integer having a value of 2 to 6; (3) R² and R³, which may be the same or different, each independently represent hydrogen or a C₁-C₆ alkyl group; and (4) R⁴ and R⁵, which may be the same or different, each independently represent a C₁-C₆ alkyl group, a group NR, in which each R independently represents a C₁-C₆ alkyl group, or together represent a C₂-C₆ alkylene group, which may contain one or more heteroatoms (such as oxygen).
Clause 12. The PMPO of clause 11, wherein the unit 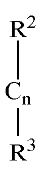 in structure (II) represents (CH₂)₃ or (CH₂)₂.
Clause 13. The PMPO of clause 11 or clause 12, wherein R¹ in structure (II) represents hydrogen.
Clause 14. The PMPO of one of clause 11 to clause 13, wherein R⁴ and R⁵ in structure (II) each represent CH₃ or C₂H₅.
Clause 15. The PMPO of one of clause 10 to clause 14, wherein the amino alkyl urea having a tertiary amino group and a primary amino group comprises a compound of the structure: 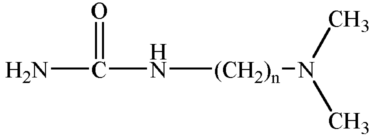 in which n is 2, 3, 4, 5 or 6; 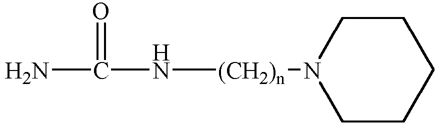 in which n is 2, 3, 4, 5 or 6; 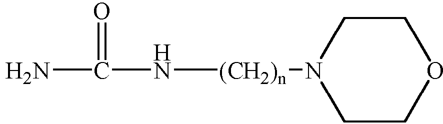 in which n is 2, 3, 4, 5 or 6; 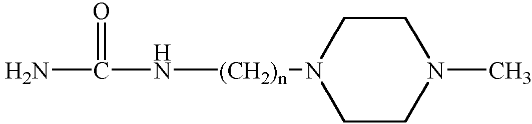 in which n is 2, 3, 4, 5 or 6; 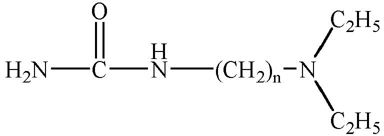 in which n is 2, 3, 4, 5 or 6; 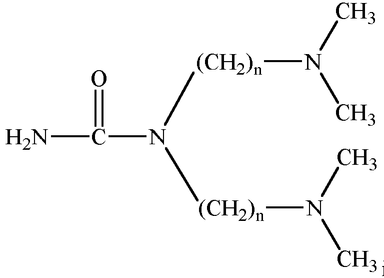 in which each n, which may be the same or different, is 2, 3, 4, 5, or 6; 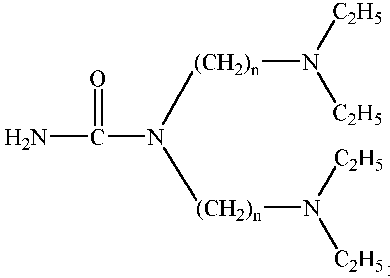 in which each n, which may be the same or different, is 2, 3, 4, 5, or 6; or a mixture of any two or more thereof.
Clause 16. The PMPO of one of clause 10 to clause 15, wherein the ethylenically unsaturated compound comprising a primary amine-reactive group comprises an isocyanate-functional ethylenically unsaturated compound, an oxirane-functional ethylenically unsaturated compound, an ethylenically unsaturated carboxylic acid anhydride, or a combination of any two or more thereof.
Clause 17. The PMPO of clause 16, wherein the ethylenically unsaturated compound comprising a primary amine-reactive group comprises an isocyanate-functional ethylenically unsaturated compound, wherein the isocyanate-functional ethylenically unsaturated compounds comprises 3-isopropenyl-α,α-dimethylbenzyl-isocyanate, 4-isopropenyl-α,α-dimethylbenzyl-isocyanate, 2-propenoyl isocyanate, 2-methyl-2-propenoyl isocyanate, allyl isocyanate, methallyl isocyanate, isocyantoethyl (meth)acrylate, isocyanatopropyl (meth)acrylate, isocyanatobutyl (meth)acrylate, an adduct of (i) a monohydroxy-substituted monofunctional or multifunctional (meth)acrylate, and (ii) a polyisocyanate, or a combination of any two or more thereof.
Clause 18. The PMPO of clause 16 or clause 17, wherein the ethylenically unsaturated compound comprising a primary amine-reactive group comprises an oxirane-functional ethylenically unsaturated compound, wherein the oxirane-functional ethylenically unsaturated compound comprises glycidyl (meth)acrylate, allyl glycidylether, vinyl glycidylether, vinyl cyclohexene oxide, limonene oxide, 2-ethylglycidyl(meth)acrylate, 2-(n-propyl)glycidyl(meth)acrylate, 2-(n-butyl)glycidyl(meth)acrylate, dimethylglycidyl methacrylate, glycidylmethylmethacrylate, glycidylacrylate, 2,3-epoxybutyl methacrylate, (3',4'-epoxyheptyl)-2-ethyl(meth)acrylate, (6',7'-epoxyheptyl)(meth)acrylate, allyl-3,4-epoxyheptylether, 6,7-epoxyheptylallylether, vinyl-3,4-epoxyheptylether, 3,4-epoxyheptylvinylether, 6,7-epoxyheptylvinylether, o-vinylbenzylglycidylether, m-vinylbenzylglycidylether, p-vinylbenzylglycidylether, 3-vinyl cyclohexene oxide, α-methyl glycidyl methacrylate, 3,4-epoxycyclohexylmethyl (meth)acrylate, (3-methyloxiran-2-yl) methyl 2-methacrylate, styrene glycidyl ether, 2, 4-vinylphenyl glycidyl ether, or a combination of any two or more thereof.
Clause 19. The PMPO of one of clause 16 to clause 18, wherein the ethylenically unsaturated compound comprising a primary amine-reactive group comprises an ethylenically unsaturated carboxylic acid anhydride, wherein the ethylenically unsaturated carboxylic acid anhydride comprises maleic anhydride, itaconic anhydride; citraconic anhydride; aconitic anhydride; bicyclo[2.2.2]oct-7-ene-2,3,5,6-tetracarboxylic dianhydride; crotonic anhydride;1-cyclopentene-1,2-dicarboxylic anhydride; methacrylic anhydride; as well as combinations of any two or more thereof.
Clause 20. The PMPO of one of clause 1 to clause 19, wherein the ethylenically unsaturated compound of structure (I) is present in an amount of 0.1 to 10% by weight, 0.1 to 5% by weight, 1 to 5% by weight, or 1 to 3% by weight, based on the total weight of the ethylenically unsaturated composition.
Clause 21. The PMPO of one of clause 1 to clause 20, wherein the ethylenically unsaturated composition further comprises styrene, a derivative of styrene, acrylonitrile, methyl acrylate, methyl methacrylate, vinylidene chloride, or a combination of any two or more thereof.
Clause 22. The PMPO of clause 21, wherein the ethylenically unsaturated composition comprises styrene and acrylonitrile, such as where styrene and acrylonitrile are present in a weight ratio of styrene to acrylonitrile (S:AN) of 80:20 to 20:80 or 75:25 to 25:75.
Clause 23. The PMPO of clause 21 or clause 22, wherein the sum of the amount of styrene and acrylonitrile is 90 to 99.9% by weight, 95 to 99.9% by weight, 95 to 99% by weight, or 97 to 99% by weight, based on the total weight of the ethylenically unsaturated composition.
Clause 24. The PMPO of one of clause 1 to clause 23, wherein a reaction mixture to produce the PMPO further comprises a pre-formed stabilizer.
Clause 25. The PMPO of clause 24, wherein the pre-formed stabilizer comprises a reaction product of a reaction mixture comprising: (a) a macromer that contains reactive unsaturation, (b) an ethylenically unsaturated compound, (c) a free radical initiator, (d) a polymer control agent; and, optionally, (e) a chain transfer agent.
Clause 26. The PMPO of clause 25, wherein the macromer comprises a reaction product of a reaction mixture comprising: (i) an H-functional starter having a functionality of 2 to 8 and a hydroxyl number of 20 to 50 mg KOH/g polyol; (ii) 0.1 to 3% by weight, based on 100% by weight of the sum of components (i), (ii) and (iii), of a hydroxyl-reactive compound that contains reactive unsaturation; and (iii) 0 to 3% by weight, 0.05 to 2.5% by weight, or 0.1 to 1.5% by weight, based on 100% by weight of the sum of components (i), (ii) and (iii), of a diisocyanate.
Clause 27. The PMPO of clause 26, wherein the H-functional starter having a functionality of 2 to 8 and a hydroxyl number of 20 to 50 mg KOH/g polyol has a functionality of 3 to 6 and/or a hydroxyl number of 25 to 40 mg KOH/g polyol.
Clause 28. The PMPO of clause 26 or clause 27, wherein the H-functional starter having a functionality of 2 to 8 and a hydroxyl number of 20 to 50 mg KOH/g polyol is an alkylene oxide adduct of a hydroxyl functional compound.
Clause 29. The PMPO of one of clause 26 to clause 28, wherein the hydroxyl-reactive compound that contains reactive unsaturation comprises methyl methacrylate, ethyl methacrylate, maleic anhydride, isopropenyl dimethyl benzyl isocyanate, 2-isocyanatoethyl methacrylate, an adduct of isophorone diisocyanate and 2-hydroxyethyl methacrylate, an adduct of toluenediisocyanate and 2-hydroxypropyl acrylate, or a combination of any two or more thereof.
Clause 30. The PMPO of one of clause 26 to clause 29, wherein the diisocyanate comprises a diphenylmethane diisocyanate; such as a mixture of 2,4'-diphenylmethane diisocyanate, 4,4'-diphenylmethane diisocyanate and/or 2,2'-diphenyl-methane diisocyanate; toluenediisocyanate; isophoronediisocyanate; hexamethylenediisocyanate; 4,4'-methylenebis(cyclohexyl isocyanate); or a combination of any two or more thereof.
Clause 31. The PMPO of one of clause 25 to clause 30, wherein the macromer is present in an amount of 10 to 40% by weight or 15 to 35% by weight, based on the total weight of the reaction mixture used to produce the pre-formed stabilizer.
Clause 32. The PMPO of one of clause 25 to clause 31, wherein the ethylenically unsaturated compound used to form the pre-formed stabilizer comprises acrylonitrile and styrene in which acrylonitrile is used in an amount of 20 to 80% by weight or 30 to 70% by weight, based on the total weight of the monomer mixture, and styrene is used in an amount of 80 to 20% by weight or 70 to 30% by weight percent, based on the total weight of the monomer mixture, such as where the ethylenically unsaturated composition used to make the pre-formed stabilizer consists of only monofunctional monomers, such as styrene and/or acrylonitrile.
Clause 33. The PMPO of one of clause 25 to clause 32, wherein the ethylenically unsaturated compound is used in an amount of 10 to 30% by weight or 15 to 25% by weight, based on the total weight of the reaction mixture used to produce the pre-formed stabilizer.
Clause 34. The PMPO of one of clause 25 to clause 33, wherein the free radical initiator used to produce the pre-formed stabilizer comprises a peroxide, a persulfate, a perborate, a percarbonate, an azo compound, or a combination of any two or more thereof, such as where the free radical initiator is present in an amount of 0.01 to 2% by weight, 0.05 to 1% by weight or 0.05 to 0.3% by weight, based on the total weight of the reaction mixture used to produce the pre-formed stabilizer.
Clause 35. The PMPO of one of clause 25 to clause 34, wherein the polymer control agent comprises a mono-ol, an aromatic hydrocarbons, an ether, or a combination of any two or more thereof, such as where the polymer control agent is present in an amount of 30 to 80% by weight or 40 to 70% by weight, based on the total weight of the reaction mixture used to produce the pre-formed stabilizer.
Clause 36. The PMPO of one of clause 25 to clause 35, wherein the chain transfer agent comprises an alkylene oxide adduct having a hydroxyl functionality of greater 3, such as where the chain transfer agent is present in an amount of 0 to 40% by weight, 0 to 20% by weight, or 0 to 10% by weight, based on the total weight of the reaction mixture used to produce the pre-formed stabilizer.
Clause 37. The PMPO of one of clause 1 to clause 36, wherein a reaction mixture used to produce the PMPO comprises a free radical initiator, such as where the free-radical initiator is present in the reaction mixture used to produce the PMPO in an amount of 0.01 to 2% by weight, based on 100% by weight of the final PMPO.
Clause 38. The PMPO of one of clause 1 to clause 37, wherein a reaction mixture used to produce the PMPO comprises a chain transfer agent, such as where the chain transfer agent comprises a mercaptan, such as dodecane thiol, ethane thiol, octane thiol, and toluene thiol, a halogenated hydrocarbon, such as carbon tetrachloride, carbon tetrabromide, and chloroform, an amine, such as diethylamine, an enol-ether, or a combination of any two or more thereof, such as where the chain transfer agent is present in an amount of 0.1 to 2% by weight or 0.2 to 1% by weight, based on the total weight of the reaction mixture used to produce the PMPO.
Clause 39. A process for producing the PMPO of one of clause 1 to clause 38, comprising: (1) providing a heterogenous mixture of the pre-formed stabilizer and, optionally, liquid diluent, in combination with the base polyol, the ethylenically unsaturated composition, and a free radical polymerization initiator; (2) feeding the mixture to a reaction zone maintained at a temperature sufficient to initiate a free radical reaction, and under sufficient pressure to maintain only liquid phases in the reaction zone; (3) maintaining the mixture in the reaction zone for a period of time sufficient to react at least a major portion of the ethylenically unsaturated composition to form a heterogenous mixture containing an enhanced PMPO, unreacted monomers and diluent; and (4) stripping the unreacted monomers and diluent from the enhanced PMPO to recover the unreacted monomers and diluent.
Clause 40. A polyurethane foam-forming composition comprising: (1) a polyisocyanate and (2) an isocyanate-reactive component comprising the PMPO of one of clause 1 to clause 38.
Clause 41. The polyurethane foam-forming composition of clause 40, wherein the isocyanate-reactive component further comprises a blowing agent, such as where the blowing agent comprises a halogenated hydrocarbon, a halogenated olefin, water, liquid carbon dioxide, a low boiling solvent, such as pentane, or a mixture of any two or more thereof, such as where the blowing agent comprises, or consists of, water, such as where the blowing agent, such as water, is present in an amount of 1 to 7 parts, such as 1 to 5 parts, by weight, based on the total weight of the isocyanate-reactive component.
Clause 42. The polyurethane foam-forming composition of clause 40 or clause 41, wherein the isocyanate-reactive component further comprises a catalyst comprising diethylenetriamine, triethylenediamine, bis(2,2'-di-methylamino)ethyl ether, N,N,N',N",N"-pentamethyldiethylenetriamine, dibutyltin dilaurate, dibutyltin diacetate, stannous octoate, or a combination of any two or more thereof, such as where the catalyst is present in an amount of 0.001 to 2 parts by weight, based on the total weight of the isocyanate-reactive component.
Clause 43. The polyurethane foam-forming composition of one of clause 40 to clause 42, wherein the isocyanate-reactive component further comprises chain extender and/or cross-linking agent having a molecular weight of below 300 Da, such as where the chain extender and/or cross-linking agent comprises glycerin, pentaerythritol, ethylene glycol, sorbitol, an alkanolamine, such as monoethanolamine, diethanolamine (DEOA) and triethanolamine (TEOA), or a combination of any two or more thereof, such as where the chain extender and/or cross-linking agent is present in an amount of up to 5 parts per by weight or 0.4 to 3.5 parts by weight, based on the total weight of the isocyanate-reactive component.
Clause 44. The polyurethane foam-forming composition of one of clause 40 to clause 43, wherein the isocyanate-reactive component further comprises a surfactant, such as where the surfactant comprises a polyetherpolysiloxane.
Clause 45. The polyurethane foam-forming composition of one of clause 40 to clause 44, wherein the polyisocyanate is present in an amount sufficient to provide the polyurethane foam-forming composition with an isocyanate index of 70 to 130, 80 to 120 or 90 to 115.
Clause 46. A method of producing a polyurethane foam comprising: (a) depositing the polyurethane foam-forming composition of one of clause 40 to clause 45 onto a moving conveyor; (b) allowing the foam-forming composition to expand and rise as it moves along the conveyor to form a continuous foam slab; and (c) cutting the continuous foam slab into foam blocks.
Clause 47. A method of producing a polyurethane foam comprising: (a) pouring the polyurethane foam-forming composition of one of clause 40 to clause 45 into a container; and (b) allowing the polyurethane foam-forming composition to rise freely in the container.
Clause 48. A method of producing a polyurethane foam comprising: (a) depositing the polyurethane foam-forming composition of one of clause 40 to clause 45 into a mold; (b) closing the mold; (c) allowing the polyurethane foam-forming composition to expand and fill the mold with the polyurethane foam; and (c) removing the polyurethane foam from the mold.
Clause 49. A PMPO comprising: (a) a base polyol having a functionality of 2 to 8 and an OH number of 20 to 400 mg KOH/g polyol; and (b) polymer particles dispersed in the base polyol, wherein the polymer particles comprise a reaction product of a reaction mixture comprising an ethylenically unsaturated composition, the ethylenically unsaturated composition comprising an ethylenically unsaturated compound that comprises a reaction product of reactants comprising: (i) an amino alkyl urea having a tertiary amino group and a primary amino group; and (ii) an ethylenically unsaturated compound comprising a primary amine-reactive group.
Clause 50. The PMPO of clause 49, wherein the PMPO has a solids content of 30 to 75% by weight, 35 to 70% by weight, 40 to 60% by weight, or 45 to 55% by weight, based on the total weight of the PMPO.
Clause 51. The PMPO of clause 49 or clause 50, wherein the PMPO has a viscosity of less than 50,000 mPa·s, less than 40,000 mPa·s, less than 30,000 mPa·s, less than 20,000 mPa·s or less than 10,000 mPa·s.
Clause 52. The PMPO of one of clause 49 to clause 51, wherein the base polyol has a functionality of 2 to 6 or 3 to 6, and/or an OH number of 20 to 200 mg KOH/g, 20 to 150 mg KOH/g, 20 to 100 mg KOH/g, or, in some cases, 20 to 60 mg KOH/g, 25 to 60 mg KOH/g, or 30 to 60 mg KOH/g.
Clause 53. The PMPO of one of clause 49 to clause 52, wherein the base polyol comprises a polyoxyethylene glycol, a polyoxyethylene triol, a polyoxyethylene tetrol, a higher functionality polyoxyethylene polyol, a polyoxypropylene glycol, a polyoxypropylene triol, a polyoxypropylene tetrol, a higher functionality polypropylene polyol, or a mixture of any two or more thereof.
Clause 54. The PMPO of one of clause 49 to clause 53, wherein the amino alkyl urea having a tertiary amino group and a primary amino group comprises a compound of the structure (II): 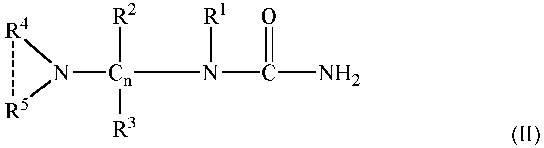 in which: (1) R¹ is hydrogen or the group 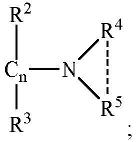 (2) each n is independently an integer having a value of 2 to 6; (3) each R² and R³, which may be the same or different, independently represents hydrogen or a C₁-C₆ alkyl group; (4) R⁴ and R⁵, which may be the same or different, each independently represent a C₁-C₆ alkyl group, a group NR, in which each R independently represents a C₁-C₆ alkyl group, or together represent a C₂-C₆ alkylene group which may contain one or more heteroatoms (such as oxygen.
Clause 55. The PMPO of clause 54, wherein the unit 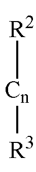 in structure (II) represents (CH₂)₃ or (CH₂)₂.
Clause 56. The PMPO of clause 54 or clause 55, wherein R¹ in structure (II) represents hydrogen.
Clause 57. The PMPO of one of clause 54 to clause 56, wherein R⁴ and R⁵ in structure (II) each represent CH₃ or C₂H₅.
Clause 58. The PMPO of one of clause 54 to clause 57, wherein the amino alkyl urea having a tertiary amino group and a primary amino group comprises a compound of the structure: 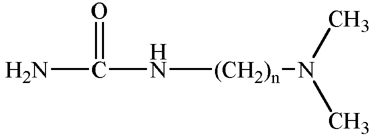 in which n is 2, 3, 4, 5 or 6; 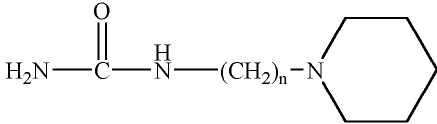 in which n is 2, 3, 4, 5 or 6; 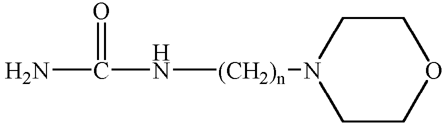 in which n is 2, 3, 4, 5 or 6; 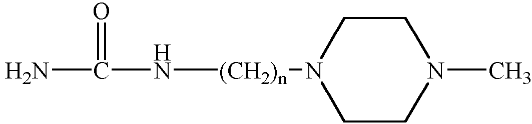 in which n is 2, 3, 4, 5 or 6; 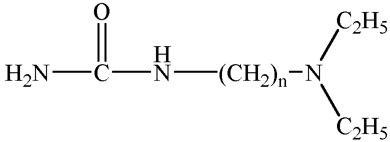 in which n is 2, 3, 4, 5 or 6; 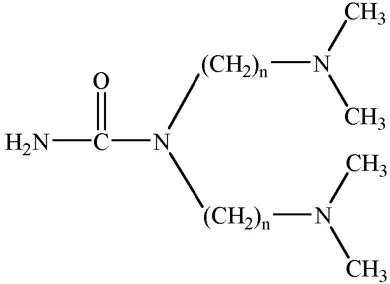 in which each n, which may be the same or different, is 2, 3, 4, 5, or 6; 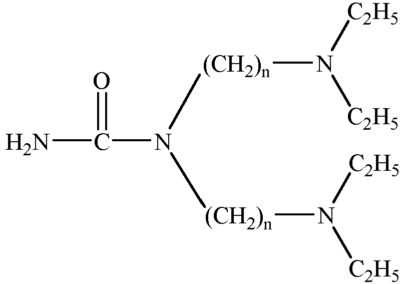 in which each n, which may be the same or different, is 2, 3, 4, 5, or 6; or a mixture of any two or more thereof.
Clause 59. The PMPO of one of clause 49 to clause 58, wherein the ethylenically unsaturated compound comprising a primary amine-reactive group comprises an isocyanate-functional ethylenically unsaturated compound, an oxirane-functional ethylenically unsaturated compound, an ethylenically unsaturated carboxylic acid anhydride, or a combination of any two or more thereof.
Clause 60. The PMPO of clause 59, wherein the ethylenically unsaturated compound comprising a primary amine-reactive group comprises an isocyanate-functional ethylenically unsaturated compound, wherein the isocyanate-functional ethylenically unsaturated compounds comprises 3-isopropenyl-α,α-dimethylbenzyl-isocyanate, 4-isopropenyl-α,α-dimethylbenzyl-isocyanate, 2-propenoyl isocyanate, 2-methyl-2-propenoyl isocyanate, allyl isocyanate, methallyl isocyanate, isocyantoethyl (meth)acrylate, isocyanatopropyl (meth)acrylate, isocyanatobutyl (meth)acrylate, an adduct of (i) a monohydroxy-substituted monofunctional or multifunctional (meth)acrylate, and (ii) a polyisocyanate, or a combination of any two or more thereof.
Clause 61. The PMPO of clause 59 or clause 60, wherein the ethylenically unsaturated compound comprising a primary amine-reactive group comprises an oxirane-functional ethylenically unsaturated compound, wherein the oxirane-functional ethylenically unsaturated compound comprises glycidyl (meth)acrylate, allyl glycidylether, vinyl glycidylether, vinyl cyclohexene oxide, limonene oxide, 2-ethylglycidyl(meth)acrylate, 2-(n-propyl)glycidyl(meth)acrylate, 2-(n-butyl)glycidyl(meth)acrylate, dimethylglycidyl methacrylate, glycidylmethylmethacrylate, glycidylacrylate, 2,3-epoxybutyl methacrylate, (3',4'-epoxyheptyl)-2-ethyl(meth)acrylate, (6',7'-epoxyheptyl)(meth)acrylate, allyl-3,4-epoxyheptylether, 6,7-epoxyheptylallylether, vinyl-3,4-epoxyheptylether, 3,4-epoxyheptylvinylether, 6,7-epoxyheptylvinylether, o-vinylbenzylglycidylether, m-vinylbenzylglycidylether, p-vinylbenzylglycidylether, 3-vinyl cyclohexene oxide, α-methyl glycidyl methacrylate, 3,4-epoxycyclohexylmethyl (meth)acrylate, (3-methyloxiran-2-yl) methyl 2-methacrylate, styrene glycidyl ether, 2, 4-vinylphenyl glycidyl ether, or a combination of any two or more thereof.
Clause 62. The PMPO of one of clause 59 to clause 61, wherein the ethylenically unsaturated compound comprising a primary amine-reactive group comprises an ethylenically unsaturated carboxylic acid anhydride, wherein the ethylenically unsaturated carboxylic acid anhydride comprises maleic anhydride, itaconic anhydride; citraconic anhydride; aconitic anhydride; bicyclo[2.2.2]oct-7-ene-2,3,5,6-tetracarboxylic dianhydride; crotonic anhydride;1-cyclopentene-1,2-dicarboxylic anhydride; methacrylic anhydride; as well as combinations of any two or more thereof.
Clause 63. The PMPO of one of clause 49 to clause 62, wherein the ethylenically unsaturated compound that comprises the reaction product of reactants comprising: (i) the amino alkyl urea having a tertiary amino group and a primary amino group; and (ii) the ethylenically unsaturated compound comprising a primary amine-reactive group is present in an amount of 0.1 to 10% by weight, 0.1 to 5% by weight, 1 to 5% by weight, or 1 to 3% by weight, based on the total weight of the ethylenically unsaturated composition.
Clause 64. The PMPO of one of clause 49 to clause 63, wherein the ethylenically unsaturated composition further comprises styrene, a derivative of styrene, acrylonitrile, methyl acrylate, methyl methacrylate, vinylidene chloride, or a combination of any two or more thereof.
Clause 65. The PMPO of clause 64, wherein the ethylenically unsaturated composition comprises styrene and acrylonitrile, such as where styrene and acrylonitrile are present in a weight ratio of styrene to acrylonitrile (S:AN) of 80:20 to 20:80 or 75:25 to 25:75.
Clause 66. The PMPO of clause 64 or clause 65, wherein the sum of the amount of styrene and acrylonitrile is 90 to 99.9% by weight, 95 to 99.9% by weight, 95 to 99% by weight, or 97 to 99% by weight, based on the total weight of the ethylenically unsaturated composition.
Clause 67. The PMPO of one of clause 49 to clause 66, wherein a reaction mixture to produce the PMPO further comprises a pre-formed stabilizer.
Clause 68. The PMPO of clause 65, wherein the pre-formed stabilizer comprises a reaction product of a reaction mixture comprising: (a) a macromer that contains reactive unsaturation, (b) an ethylenically unsaturated compound, (c) a free radical initiator, (d) a polymer control agent; and, optionally, (e) a chain transfer agent.
Clause 69. The PMPO of clause 68, wherein the macromer comprises a reaction product of a reaction mixture comprising: (i) an H-functional starter having a functionality of 2 to 8 and a hydroxyl number of 20 to 50 mg KOH/g polyol; (ii) 0.1 to 3% by weight, based on 100% by weight of the sum of components (i), (ii) and (iii), of a hydroxyl-reactive compound that contains reactive unsaturation; and (iii) 0 to 3% by weight, 0.05 to 2.5% by weight, or 0.1 to 1.5% by weight, based on 100% by weight of the sum of components (i), (ii) and (iii), of a diisocyanate.
Clause 70. The PMPO of clause 69, wherein the H-functional starter having a functionality of 2 to 8 and a hydroxyl number of 20 to 50 mg KOH/g polyol has a functionality of 3 to 6 and/or a hydroxyl number of 25 to 40 mg KOH/g polyol.
Clause 71. The PMPO of clause 69 or clause 70, wherein the H-functional starter having a functionality of 2 to 8 and a hydroxyl number of 20 to 50 mg KOH/g polyol is an alkylene oxide adduct of a hydroxyl functional compound.
Clause 72. The PMPO of one of clause 69 to clause 71, wherein the hydroxyl-reactive compound that contains reactive unsaturation comprises methyl methacrylate, ethyl methacrylate, maleic anhydride, isopropenyl dimethyl benzyl isocyanate, 2-isocyanatoethyl methacrylate, an adduct of isophorone diisocyanate and 2-hydroxyethyl methacrylate, an adduct of toluenediisocyanate and 2-hydroxypropyl acrylate, or a combination of any two or more thereof.
Clause 73. The PMPO of one of clause 69 to clause 72, wherein the diisocyanate comprises a diphenylmethane diisocyanate; such as a mixture of 2,4'-diphenylmethane diisocyanate, 4,4'-diphenylmethane diisocyanate and/or 2,2'-diphenyl-methane diisocyanate; toluenediisocyanate; isophoronediisocyanate; hexamethylenediisocyanate; 4,4'-methylenebis(cyclohexyl isocyanate); or a combination of any two or more thereof.
Clause 74. The PMPO of one of clause 68 to clause 73, wherein the macromer is present in an amount of 10 to 40% by weight or 15 to 35% by weight, based on the total weight of the reaction mixture used to produce the pre-formed stabilizer.
Clause 75. The PMPO of one of clause 68 to clause 74, wherein the ethylenically unsaturated compound used to form the pre-formed stabilizer comprises acrylonitrile and styrene in which acrylonitrile is used in an amount of 20 to 80% by weight or 30 to 70% by weight, based on the total weight of the monomer mixture, and styrene is used in an amount of 80 to 20% by weight or 70 to 30% by weight percent, based on the total weight of the monomer mixture, such as where the ethylenically unsaturated composition used to make the pre-formed stabilizer consists of only monofunctional monomers, such as styrene and/or acrylonitrile.
Clause 76. The PMPO of one of clause 68 to clause 75, wherein the ethylenically unsaturated compound is used in an amount of 10 to 30% by weight or 15 to 25% by weight, based on the total weight of the reaction mixture used to produce the pre-formed stabilizer.
Clause 77. The PMPO of one of clause 68 to clause 76, wherein the free radical initiator used to produce the pre-formed stabilizer comprises a peroxide, a persulfate, a perborate, a percarbonate, an azo compound, or a combination of any two or more thereof, such as where the free radical initiator is present in an amount of 0.01 to 2% by weight, 0.05 to 1% by weight or 0.05 to 0.3% by weight, based on the total weight of the reaction mixture used to produce the pre-formed stabilizer.
Clause 78. The PMPO of one of clause 68 to clause 77, wherein the polymer control agent comprises a mono-ol, an aromatic hydrocarbons, an ether, or a combination of any two or more thereof, such as where the polymer control agent is present in an amount of 30 to 80% by weight or 40 to 70% by weight, based on the total weight of the reaction mixture used to produce the pre-formed stabilizer.
Clause 79. The PMPO of one of clause 68 to clause 78, wherein the chain transfer agent comprises an alkylene oxide adduct having a hydroxyl functionality of greater 3, such as where the chain transfer agent is present in an amount of 0 to 40% by weight, 0 to 20% by weight, or 0 to 10% by weight, based on the total weight of the reaction mixture used to produce the pre-formed stabilizer.
Clause 80. The PMPO of one of clause 49 to clause 79, wherein a reaction mixture used to produce the PMPO comprises a free radical initiator, such as where the free-radical initiator is present in the reaction mixture used to produce the PMPO in an amount of 0.01 to 2% by weight, based on 100% by weight of the final PMPO.
Clause 81. The PMPO of one of clause 49 to clause 80, wherein a reaction mixture used to produce the PMPO comprises a chain transfer agent, such as where the chain transfer agent comprises a mercaptan, such as dodecane thiol, ethane thiol, octane thiol, and toluene thiol, a halogenated hydrocarbon, such as carbon tetrachloride, carbon tetrabromide, and chloroform, an amine, such as diethylamine, an enol-ether, or a combination of any two or more thereof, such as where the chain transfer agent is present in an amount of 0.1 to 2% by weight or 0.2 to 1% by weight, based on the total weight of the reaction mixture used to produce the PMPO.
Clause 82. A process for producing the PMPO of one of clause 49 to clause 81, comprising: (1) providing a heterogenous mixture of the pre-formed stabilizer and, optionally, liquid diluent, in combination with the base polyol, the ethylenically unsaturated composition, and a free radical polymerization initiator; (2) feeding the mixture to a reaction zone maintained at a temperature sufficient to initiate a free radical reaction, and under sufficient pressure to maintain only liquid phases in the reaction zone; (3) maintaining the mixture in the reaction zone for a period of time sufficient to react at least a major portion of the ethylenically unsaturated composition to form a heterogenous mixture containing an enhanced PMPO, unreacted monomers and diluent; and (4) stripping the unreacted monomers and diluent from the enhanced PMPO to recover the unreacted monomers and diluent.
Clause 83. A polyurethane foam-forming composition comprising: (1) a polyisocyanate and (2) an isocyanate-reactive component comprising the PMPO of one of clause 49 to clause 81.
Clause 84. The polyurethane foam-forming composition of clause 83, wherein the isocyanate-reactive component further comprises a blowing agent, such as where the blowing agent comprises a halogenated hydrocarbon, a halogenated olefin, water, liquid carbon dioxide, a low boiling solvent, such as pentane, or a mixture of any two or more thereof, such as where the blowing agent comprises, or consists of, water, such as where the blowing agent, such as water, is present in an amount of 1 to 7 parts, such as 1 to 5 parts, by weight, based on the total weight of the isocyanate-reactive component.
Clause 85. The polyurethane foam-forming composition of clause 83 or clause 84, wherein the isocyanate-reactive component further comprises a catalyst comprising diethylenetriamine, triethylenediamine, bis(2,2'-di-methylamino)ethyl ether, N,N,N',N",N"-pentamethyldiethylenetriamine, dibutyltin dilaurate, dibutyltin diacetate, stannous octoate, or a combination of any two or more thereof, such as where the catalyst is present in an amount of 0.001 to 2 parts by weight, based on the total weight of the isocyanate-reactive component.
Clause 86. The polyurethane foam-forming composition of one of clause 83 to clause 85, wherein the isocyanate-reactive component further comprises chain extender and/or cross-linking agent having a molecular weight of below 300 Da, such as where the chain extender and/or cross-linking agent comprises glycerin, pentaerythritol, ethylene glycol, sorbitol, an alkanolamine, such as monoethanolamine, diethanolamine (DEOA) and triethanolamine (TEOA), or a combination of any two or more thereof, such as where the chain extender and/or cross-linking agent is present in an amount of up to 5 parts per by weight or 0.4 to 3.5 parts by weight, based on the total weight of the isocyanate-reactive component.
Clause 87. The polyurethane foam-forming composition of one of clause 83 to clause 86, wherein the isocyanate-reactive component further comprises a surfactant, such as where the surfactant comprises a polyetherpolysiloxane.
Clause 88. The polyurethane foam-forming composition of one of clause 83 to clause 87, wherein the polyisocyanate is present in an amount sufficient to provide the polyurethane foam-forming composition with an isocyanate index of 70 to 130, 80 to 120 or 90 to 115.
Clause 89. A method of producing a polyurethane foam comprising: (a) depositing the polyurethane foam-forming composition of one of clause 83 to clause 88 onto a moving conveyor; (b) allowing the foam-forming composition to expand and rise as it moves along the conveyor to form a continuous foam slab; and (c) cutting the continuous foam slab into foam blocks.
Clause 90. A method of producing a polyurethane foam comprising: (a) pouring the polyurethane foam-forming composition of one of clause 83 to clause 88 into a container; and (b) allowing the polyurethane foam-forming composition to rise freely in the container.
Clause 91. A method of producing a polyurethane foam comprising: (a) depositing the polyurethane foam-forming composition of one of clause 83 to clause 88 into a mold; (b) closing the mold; (c) allowing the polyurethane foam-forming composition to expand and fill the mold with the polyurethane foam; and (c) removing the polyurethane foam from the mold.
The non-limiting and non-exhaustive examples that follow are intended to further describe various non-limiting and non-exhaustive embodiments without restricting the scope of the embodiments described in this specification.

### EXAMPLES

### Examples 1-5

The following components were used in the examples:
Polyol 1: A propylene oxide adduct of sorbitol containing 12% ethylene oxide as a cap with a hydroxyl number of 33 g KOH/g polyol;
Polyol 2: A propylene oxide adduct of glycerine containing 20% ethylene oxide as a cap with a hydroxyl number of 35 mg KOH /g polyol and a viscosity of 810 mPa.s;
Polyol 3: A propylene oxide/ethylene oxide adduct of glycerine containing a 12% ethylene oxide with a hydroxyl number of 52 mg KOH/g polyol and having a viscosity of 510 mPa.s;
PCA: Isopropanol, a polymer control agent;
TMI: Isopropenyl dimethyl benzyl isocyanate (an unsaturated aliphatic isocyanate) sold as TMI^{®} by Allnex;
Isocyanate A: A monomeric MDI comprising about 42% by weight of the 4,4' -isomer of MDI, about 57% by weight of the 2,4'-isomer of MDI and the balance being the 2,2'-isomer of MDI;
Urea-Amine: 3-Dimethylaminopropyl urea, commercially available as Dabco NE-1070 from Evonik; Initiator A: tertiary-Butylperoxy-2-ethylhexanoate available as TBPEH from United initiators;
Initiator B: tertiary-Amyl peroxypivalate, a free-radical polymerization initiator commercially available as Trigonox 125-C75 from Nouryon;
Initiator C: 1,1-di(tert-amylperoxy)cyclohexane, a free-radical polymerization initiator, commercially available as Trigonox 122-C80 from Nouryon; and
Catalyst A: Bismuth neodecanoate, commercially available under the name CosCat 83 from Vertellus.

### Test Methods

Viscosity: Dynamic viscosities are reported in mPa.s and measured on an Anton-Paar SVM 3000 viscometer at 25 °C that has been demonstrated to give equivalent results as can be generated with ASTM-D4878-15. The instrument was calibrated using mineral oil reference standards of known viscosity.

Filtration: Filterability was determined by diluting one part by weight sample (e.g. 200 grams) of polymer polyol with two parts by weight anhydrous isopropanol (e.g. 400 grams) to remove any viscosity-imposed limitations and using a fixed quantity of material relative to a fixed cross-sectional area of screen (e.g. 1 1/8 in. diameter), such that all of the polymer polyol and isopropanol solutions passes by gravity through a 150-mesh screen. The 150-mesh screen has a square mesh with average mesh opening of 105 microns and it is a "Standard Tyler" 150 square-mesh screen. The amount of sample which passed through the screen is reported in percent, and a value of 100 percent indicates that over 99 weight percent passed through the screen.

### MACROMER PREPARATON:

Macromer A: Prepared by adding Polyol 1 (3000g), TMI (18.1g), and Isocyanate A (6.0g) to a 12L flask. Catalyst A (100ppm) was then added to the flask and the reaction mixture stirred for 4 hours at 75°C.

Macromer B: Prepared by adding Polyol 1 (2700g) and TMI (55g) to a 12L flask. Catalyst A (200ppm) was then added to the flask and the reaction mixture stirred for 2 hours at 75 °C.

### MODIFIED AMINE PREPARATION:

Amine A: Prepared by adding Urea-Amine (200g), Irganox 1076 (0.03g), Coscat 83 (0.09g), and toluene (300 mL) to a 2L 3-neck flask with stirring and heating to 75°C. TMI (237g) was then added dropwise, keeping the temperature ≤ 85 °C. The reaction mixture was stirred at 75°C for 4 hours. Toluene was then removed under vacuum and 50°C to give the product Amine A.

### PREFORMED STABILIZER (PFS) PREPARATION:

The pre-formed stabilizer was prepared in a two-stage reaction system comprising a continuously-stirred tank reactor (CSTR) fitted with an impeller and 4 baffles (first-stage) and a plug-flow reactor (second stage). The residence time in each reactor was about 60 minutes. The reactants were pumped continuously to the reactor from feed tanks through an in-line static mixer and then through a feed tube into the reactor, which was well mixed. The temperature of the reaction mixture was controlled at 120 ± 5°C. The product from the second-stage reactor overflowed continuously through a pressure regulator designed to control the pressure in each stage at 65 psig. The product, i.e. the pre-formed stabilizer, then passed through a cooler and into a collection vessel. The preformed stabilizer formulation is disclosed in Table 1. Macromer A and Macromer B were converted to PFS A and PFS B, respectively, using this formulation.

**Table 1: Preformed Stabilizer Composition**

| **Component** | **PFS** |
|---|---|
| PCA type | Isopropanol |
| PCA, wt. % | 60.0 |
| Macromer, wt. % | 24.0 |
| Monomer, wt. % | 15.9 |
| Styrene/acrylonitrile ratio | 50:50 |
| Initiator A, wt. % | 0.1 |

### POLYMER POLYOL PREPARATION:

Table 2 relates to the preparation of polymer polyols of the present specification. Each polymer polyol was prepared in a two-stage reaction system comprising a continuously-stirred tank reactor (CSTR) fitted with an impeller and 4 baffles (first-stage) and a plug-flow reactor (second stage). The residence time in each reactor was about 60 minutes. The reactants were pumped continuously from feed tanks through an in-line static mixer and then through a feed tube into the reactor, which was well mixed. The temperature of the reaction mixture was controlled at 120 ± 5°C. The product from the second-stage reactor overflowed continuously through a pressure regulator designed to control the pressure in each stage at 45 psig. The product, *i.e.,* the polymer polyol, then passed through a cooler and into a collection vessel. The crude product was vacuum stripped to remove volatiles. The wt. % total polymer in the product was calculated from the concentrations of residual monomers measured in the crude polymer polyol before stripping.

Examples 3 and 5 are inventive examples and Examples 1, 2 and 4 are comparative examples.

**Table 2. PMPO Feed Composition and Properties**

| | Example 1¹ | Example 2¹ | Example 3 | Example 4¹ | Example 5 |
|---|---|---|---|---|---|
| Base Polyol | 2 | 2 | 2 | 3 | 3 |
| Polyol (wt% in feed) | 49.41 | 49.28 | 49.29 | 46.12 | 46.13 |
| PFS | A | A | A | B | B |
| PFS (wt% in feed) | 8.33 | 8.33 | 8.33 | 6.88 | 6.87 |
| Styrene (wt% in feed) | 26.62 | 16.48 | 16.06 | 30.22 | 29.61 |
| Acrylonitrile (wt% in feed) | 15.38 | 25.64 | 24.99 | 16.15 | 15.81 |
| Amine A (wt% in feed) | 0 | 0 | 1.07 | 0 | 0.93 |
| Initiator B (wt% in feed) | 0.25 | 0.25 | 0.25 | 0.25 | 0.25 |
| Initiator C (wt% in feed) | 0.015 | 0.015 | 0.015 | 0.015 | 0.015 |
| Total Polymer (%) | 44.9 | 45.1 | 44.6 | 48.9 | 48.8 |
| Viscosity (mPa.s) | 5854 | 5652 | 5665 | 4937 | 4661 |
| Filterability (%) | 100 | 100 | 100 | 100 | 100 |
| Particle size, µm | 0.978 | 0.950 | 0.786 | 0.887 | 0.927 |

| | | | | | |
|---|---|---|---|---|---|
| ¹Comparative example | | | | | |

PMPOs from Table 2 were selected and submitted for total volatile organic compound (TVOC) analysis using a headspace GC (HSGC) coupled with a mass spectrometer to identify volatile components from the PMPOs. As can be seen in Table 3, the inventive examples contain significantly less TVOCs.

**Table 3. PMPO VOC Measurements¹**

| | PMPO | | | |
|---|---|---|---|---|
| VOC Type | Example 1² | Example 3 | Example 4² | Example 5 |
| Formaldehyde | 64.9 | 0.18 | 65.9 | 0.09 |
| Acetaldehyde | >100 | 6.96 | >100 | 0.81 |
| Methyl acetate | >100 | 0 | >100 | 0 |
| Formic acid | >100 | 0 | >100 | 0 |
| Acetic acid | >100 | 0 | >100 | 0 |
| Acetol | >100 | 3.2 | >100 | 0 |
| Methyl formate | 57.7 | 0 | 71.0 | 0 |
| Acetone | 31.4 | 3.5 | 78.5 | 2.42 |
| 2-Propenal | 1.83 | 0.48 | 1.07 | 0.22 |
| Propionaldehyde | 5.85 | 0.24 | 8.12 | 0.22 |
| 2-Methyl-1,3-dioxane | 45.9 | 0.61 | 110.3 | 0 |
| 2,2-Dimethyl-1,3-dioxane | 14.7 | 0 | 50.3 | 0 |
| Trimethyl-1,3-dioxolane | 25.2 | 0 | 100 | 0 |
| Total | 747.5 | 15.2 | 985.2 | 3.8 |

| | | | | |
|---|---|---|---|---|
| ¹ Measured using Head Space-GC-MS at 160°C and all values reported in ppm. ² Comparative examples | | | | |

GC-HS VOC analysis was also performed for the PMPOs of Examples 1 and 3 at three temperatures, 100°C, 130°C and 160°C. Results are set forth in Table 4.

**Table 4**

| Test Temperature | VOC Description | PMPO of Example 1 | PMPO of Example 3 |
|---|---|---|---|
| 100 °C | Formaldehyde | - | - |
| 100 °C | Acetaldehyde | 0.27 ppm | 0.16 ppm |
| 130 °C | Formaldehyde | 0.13 ppm | - |
| 130 °C | Acetaldehyde | 0.96 ppm | 0.45 ppm |
| 160 °C | Formaldehyde | 64.9 ppm | 0.18 ppm |
| 160 °C | Acetaldehyde | >100 ppm | 6.96 ppm |

### Examples 6-10

Each of the amines listed in Table 5 (1% by weight based on total weight of PMPO) was stirred into a PMPO of the type described by Example 1 until well mixed. Mixtures were evaluated by differential scanning calorimetry ("DSC") both dynamically at the temperature range of 20 to 220°C to determine the temperature of the mixture at the onset of oxidation and isothermally at 130°C and 140°C to measure the time (in minutes) for the onset of oxidation. Results are set forth in Table 5. As is apparent, the mixture of Example 9 had improved oxidative stability at 130°C and 140°C.

**Table 5**

| Example | Amine | Dynamic Scan | Isothermal Scan (130°C) | Isothermal Scan (140°C) |
|---|---|---|---|---|
| 6 | None | 171°C | 89.9 minutes | 28.6 minutes |
| 7 | Diethanolamine | 173°C | 66.3 minutes | 20.2 minutes |
| 8 | N-(2-(dimethylamino)ethoxy)ethyl)-N-methyl-1,3-propanediamine | 173°C | >120 minutes | 37.1 minutes |
| 9 | Dimethylaminopropyl urea | 175°C | >120 minutes | 116.4 minutes |
| 10 | Bis[3-(dimethylamino)propyl]amine | 173°C | 90.5 minutes | 25 minutes |

### Examples 11-13

Form-forming compositions were prepared using the ingredients and amounts (% by weight) listed in Table 6 below in which:
POLYOL 1: a polyether polyol having a hydroxyl number of 31.5 mg KOH/g;
PMPO 1: PMPO of Example 1;
PMPO 2: PMPO of Example 2;
PMPO 3: PMPO of Example 3;
CATALYST 1: diethanolamine
CATALYST 2: Bis(2-dimethylaminoethyl) ether, commercially available as Niax^{™} A-1 from Momentive;
CATALYST 3: triethylenediamine, commercially available as Niax^{™} A-33 from Momentive;
SURFACTANT: surfactant commercially available as VORASURF^{™} DC 5043 from Dow; and
ISOCYANATE: Mondur E445 a blend of toluene diisocyanate (TDI) and polymeric diphenylmethane diisocyanate (MDI) having a NCO content of 44.5-45.2 wt%, commercially available as Mondur^{®} 445 from Covestro.

**Table 6**

| Ingredient | Example 11 | Example 12 | Example 13 |
|---|---|---|---|
| POLYOL 1 | 40.23 | 40.23 | 40.23 |
| PMPO 1 | 32.91 | -- | -- |
| PMPO 2 | -- | 32.91 | -- |
| PMPO 3 | -- | -- | 32.91 |
| Water | 1.57 | 1.57 | 1.57 |
| CATALYST 1 | 0.91 | 0.91 | 0.91 |
| CATALYST 2 | 0.06 | 0.06 | 0.06 |
| CATALYST 3 | 0.23 | 0.23 | 0.23 |
| SURFACTANT | 0.73 | 0.73 | 0.73 |
| ISOCYANATE | 23.35 | 23.35 | 23.35 |

Foams were prepared by combining all ingredients except the ISOCYANATE in a mix cup with a baffle and mixing for 55 seconds. The ISOCYANATE was added to the mix cup and the resulting mixture mixed for 5 seconds. The composition was then quickly poured into a 150°F mold. The mold lid was quickly closed and an airbag was inflated. The foam was demolded at 5 minutes. The foam was hand crushed and sent through a roller crusher 3 times. Foaming behavior was evaluated. Results are set forth in Table 7. The formulation of Example 13 exhibited faster reactivity as indicated by shorter time to reach the maximum bun height.

**Table 7**

| Property | Example 11 | Example 12 | Example 13 |
|---|---|---|---|
| Max Height (inches) | 18.5 | 18.5 | 18.5 |
| Max Height Time (seconds) | 103.0 | 105.4 | 95.4 |
| 97% Max Height (inches) | 17.7 | 17.7 | 17.8 |
| 97% Max Height Time (seconds) | 65.9 | 66.3 | 60.8 |
| Final Height (inches) | 17.9 | 17.9 | 18.0 |
| Max Rise Rate (inches/second) | 0.52 | 0.53 | 0.55 |
| Max Rise Time (seconds) | 16.7 | 17.2 | 14.3 |
| %Settle (Max-Final) | 3.4 | 3.4 | 3.1 |

Foam buns were wrapped with the aluminum foil immediately after demolding and were conditioned overnight. 8 cm x 10 cm samples (with a thickness of 7 cm) were cut so that only the A side (the surface of the foam opposite from the mold lid) foam skin was exposed. GC-HS VOC analysis on the samples was performed at 65°C. Results are in Table 8.

**Table 8**

| PMPO | Example 11 | Example 12 | Example 13 | Example 13 (duplicate) |
|---|---|---|---|---|
| adduct in foam | 0 | 0 | 3291 ppm | 3291 ppm |
| Formaldehyde | 0.841 mg/sample | 0.859 mg/sample | 0.973 mg/sample | 1.086 mg/sample |
| Acetaldehyde | 0.719 mg/sample | 0.826 mg/sample | 0.592 mg/sample | 0.657 mg/sample |

### Examples 14-21

Examples 14-21 are comparative examples. In these examples, mixtures of Amine A with 2000 grams of POLYOL 1 and mixtures of Amine A with 2000 grams of PMPO 1 were prepared using the amounts of Amine A set forth in Table 9. In each case, the materials were added to a 3L three neck flask at 25 °C under a nitrogen sparge. A vacuum was applied while continuing a nitrogen sparge and the mixture stirred for 30 minutes to ensure residual oxygen removal. The vacuum was broken after 30 minutes, keeping the nitrogen sparge going. The mixture was then heated to 120 °C and stirred under nitrogen for 1 hour to ensure Amine A was completely dissolved. The mixture was cooled, and the final product bottled for analysis.

In each case, the resulting solution remained clear after cooling down to room temperature, which indicated complete solubilization. However, the clear solution had a yellow tinted color which was an indication of oxidation during the heating. Additional aldehydes may have been generated as a result of this oxidation which complicated the VOC testing on polyols and foam.

Results of GC-HS testing at various temperatures is summarized in Table 9. In these examples, no apparent "anti-oxidation" effect by the presence of Amine A in an admixture with PMPO 1 or POLYOL 1 was observed.

**Table 9**

| | | | Acetaldehyde | | | | Formaldehyde | | | |
|---|---|---|---|---|---|---|---|---|---|---|
| Example | Polyol/PMPO | Amine A | 65°C | 100°C | 130°C | 160°C | 65°C | 100°C | 130°C | 160°C |
| 14 | PMPO 1 | 0 | - | 0.07 | 0.33 | 146.72 | - | - | - | 43.91 |
| 15 | PMPO 1 | 500 ppm | - | 0.15 | 0.56 | 149.88 | - | - | - | 42.57 |
| 16 | PMPO 1 | 1000 ppm | - | 0.22 | 0.52 | 212.21 | - | - | - | 63.64 |
| 17 | PMPO 1 | 3000 ppm | 0.11 | 0.34 | 1.05 | 149.89 | - | - | - | 20.68 |
| 18 | POLYOL 1 | 0 | 0.18 | 0.43 | 3.66 | 197.41 | - | - | - | 38.72 |
| 19 | POLYOL 1 | 500 ppm | 0.2 | 0.67 | 4.18 | 171.94 | - | - | 0.35 | 32.97 |
| 20 | POLYOL 1 | 1000 ppm | 0.17 | 0.74 | 4.86 | 175.67 | - | - | 0.27 | 31.63 |
| 21 | POLYOL 1 | 3000 ppm | 0.18 | 1.18 | 4.21 | 89.27 | - | - | 0.12 | 9.79 |

### Examples 22-26

Examples 22-26 are comparative examples, since Amine A was merely admixed with PMPO 1 and/or POLYOL 1. Foam-forming compositions were prepared using prepared using the ingredients and amounts (% by weight) listed in Table 10.

**Table 10**

| Ingredient | Example 22 | Example 23 | Example 24 | Example 25 | Example 26 |
|---|---|---|---|---|---|
| Example 18 | 40.23 | -- | -- | -- | -- |
| Example 19 | -- | 40.23 | -- | -- | -- |
| Example 20 | -- | -- | 40.23 | -- | -- |
| Example 21 | -- | -- | -- | 40.23 | 40.23 |
| Example 14 | 32.91 | -- | -- | -- | -- |
| Example 15 | -- | 32.91 | -- | -- | -- |
| Example 16 | -- | -- | 32.91 | -- | 32.91 |
| Example 17 | -- | -- | -- | 32.91 | -- |
| Water | 1.57 | 1.57 | 1.57 | 1.57 | 1.57 |
| CATALYST 1 | 0.91 | 0.91 | 0.91 | 0.91 | 0.91 |
| CATALYST 2 | 0.06 | 0.06 | 0.06 | 0.06 | 0.06 |
| CATALYST 3 | 0.23 | 0.23 | 0.23 | 0.23 | 0.23 |
| SURFACTANT | 0.73 | 0.73 | 0.73 | 0.73 | 0.73 |
| ISOCYANATE | 23.35 | 23.35 | 23.35 | 23.35 | 23.35 |

Foam buns were prepared and tested as described above for Examples 11-13. Results are in Table 11. In these examples, the presence of Amine A seemed to have no effect on the foam aldehyde emissions results tested at 65°C.

**Table 11**

| Foam | Example 22 | Example 22 (Duplicate) | Example 23 | Example 24 | Example 25 | Example 26 |
|---|---|---|---|---|---|---|
| Amine A in polyol (ppm) | 0 | 0 | 1000 | 2000 | 6000 | 4000 |
| Amine A in foam (ppm) | 0 | 0 | 731 | 1462 | 4386 | 2924 |
| Formaldehyde (mg) | 1.18 | 1.34 | 1.36 | 1.54 | 1.42 | 1.65 |
| Acetaldehyde (mg) | 1.5 | 1.81 | 1.41 | 1.78 | 1.82 | 1.78 |

### Examples 27-30

Free-rise bench scale foams were prepared using the ingredients and amounts (in parts per 100 parts by weight) set forth in Table 12 below. The free-rise bench scale foams of Table 12 were prepared using the following procedure. The polyols, water, silicone surfactants, amine catalysts, and any other non-isocyanate additives, except tin catalyst, were added to a cylindrical container fitted with baffles. The contents were mixed at 2400 rpm for 60 seconds with an agitator having two turbine impellers. Tin catalyst was added at this time. The mixture was then degassed for 15 seconds. After degassing, the contents were mixed at 2400 rpm for 15 seconds, during which period the isocyanate was added when about 8 seconds of mixing time remained. The mixture was then poured into a 14×14×6-inch cardboard box, where it rose freely until the reaction was complete. A batch size sufficient to give a bun at least about 6 inches high was employed. A sonar unit was located above the cardboard box that measures and records the rise profile of the foam as a function of time. The foam operator noted the time when the foam blowoff occurred. The freshly prepared bun was cured for 20 minutes in an oven at 120° C. and then allowed to cure at ambient conditions for a minimum of 1 day. The time to 97% max height, time of maximum rise rate, blowoff time, and max rise rate, in Table 12 are derived from the sonar data. In Table 12, Example 27 is a comparative example and Examples 28-30 are inventive examples.

**Table 12**

| Ingredient | Example 27 | Example 28 | Example 29 | Example 30 |
|---|---|---|---|---|
| Polyol¹ | 60.00 | 60.00 | 60.00 | 60.00 |
| PMPO of Example 1 | 40.00 | -- | -- | -- |
| PMPO of Example 5 | -- | 40.00 | 40.00 | 40.00 |
| Distilled Water | 3.00 | 3.00 | 3.00 | 3.00 |
| Surfactant² | 1.00 | 1.00 | 1.00 | 1.00 |
| Catalyst #1³ | 0.030 | 0.030 | 0.023 | 0.010 |
| Catalyst #2⁴ | 0.08 | 0.08 | 0.08 | 0.08 |
| Catalyst #3⁵ | 0.21 | 0.21 | 0.21 | 0.21 |
| Isocyanate⁶ | 39.41 | 39.41 | 39.41 | 39.40 |
| Isocyanate Index | 110.00 | 110.00 | 110.00 | 110.00 |
| Time to 97% max height (s) | 102 | 87 | 88 | 98 |
| Maximum rise rate (in/s) | 0.108 | 0.122 | 0.123 | 0.110 |
| Time of max rise rate (s) | 60 | 50 | 42 | 54 |
| Blowoff time (s) | 102 | 91 | 93 | 100 |

The time to 97% max height, time of maximum rise rate, blowoff time, and max rise rate, are indications of reactivity. Lower time values for the first three indicates increased reactivity. The higher the value of max rise rate the greater the reactivity. In Table 12, Example 27 used the PMPO of Example 1, which is a comparative example. Example 28 used the PMPO of Example 5 and, with otherwise the same formulation as Example 27, all the reactivity times were faster. In Example 29, the content of the PMPO of Example 5 remained the same as in Example 28, but the content of Catalyst #1 was lowered from 0.03 php to 0.023 php and all the reactivity times were still faster than Example 27. In Example 30, the content of the PMPO of Example 5 remained the same but the content of Catalyst #1 was lowered from 0.03 php to 0.01 php and reactivity was comparable to Example 27.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A polymer polyol (PMPO) comprising:
(a) a base polyol having a hydroxyl functionality of 2 to 8 and an OH number of 20 to 400 mg KOH/g polyol; and
(b) polymer particles dispersed in the base polyol,
wherein the polymer particles comprise a reaction product of a reaction mixture comprising an ethylenically unsaturated composition, the ethylenically unsaturated composition comprising an ethylenically unsaturated compound of the structure (I): in which: 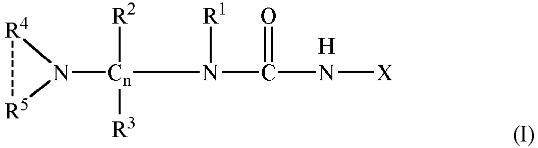
(1) R¹ is hydrogen or the group 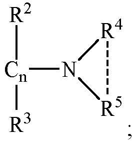
(2) each n is independently an integer having a value of 2 to 6;
(3) R² and R³, which may be the same or different, each independently represent hydrogen or a C₁-C₆ alkyl group;
(4) R⁴ and R⁵, which may be the same or different, each independently represent a C₁-C₆ alkyl group, a group NR, in which each R independently represents a C₁-C₆ alkyl group, or together represent a C₂-C₆ alkylene group, which may contain one or more heteroatoms; and
(5) X represents a residue of an ethylenically unsaturated primary amine-reactive compound.

2. The PMPO of claim 1, wherein each 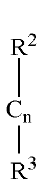 in structure (I) independently represents (CH₂)₃ or (CH₂)₂.

3. The PMPO of claim 1 or claim 2, wherein R¹ in structure (I) represents hydrogen.

4. The PMPO of one of claim 1 to claim 3, wherein R⁴ and R⁵ in structure (I) each represent CH₃ or C₂H₅.

5. The PMPO of one of claim 1 to claim 4, wherein X in structure (I) includes a urea group.

6. The PMPO of one of claim 1 to claim 5, wherein the ethylenically unsaturated compound of structure (I) is a reaction product of reactants comprising: (i) an amino alkyl urea having a tertiary amino group and a primary amino group; and (ii) an ethylenically unsaturated compound comprising a primary amine-reactive group.

7. The PMPO of claim 6, wherein the amino alkyl urea having a tertiary amino group and a primary amino group comprises a compound of structure (II): in which: 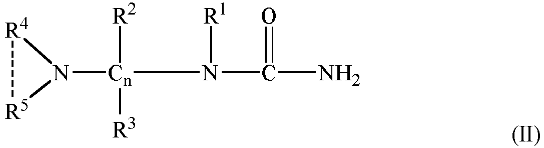
(1) R¹ is hydrogen or the group 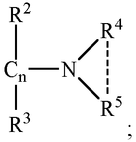
(2) each n is independently an integer having a value of 2 to 6;
(3) R² and R³, which may be the same or different, each independently represent hydrogen or a C₁-C₆ alkyl group; and
(4) R⁴ and R⁵, which may be the same or different, each independently represent a C₁-C₆ alkyl group, a group NR, in which each R independently represents a C₁-C₆ alkyl group, or together represent a C₂-C₆ alkylene group, which may contain one or more heteroatoms.

8. The PMPO of claim 7, wherein the amino alkyl urea having a tertiary amino group and a primary amino group comprises a compound of the structure:

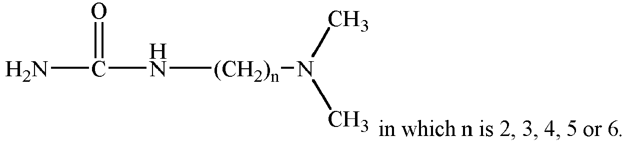

9. The PMPO of claim 8, wherein n is 3.

10. The PMPO of one of claim 6 to claim 9, wherein the ethylenically unsaturated compound comprising a primary amine-reactive group comprises an isocyanate-functional ethylenically unsaturated compound, such as 3-isopropenyl-α,α-dimethylbenzyl-isocyanate.

11. The PMPO of one of claim 1 to claim 10, wherein the ethylenically unsaturated compound of structure (I) is present in an amount of 0.1 to 10% by weight, such as 1 to 3% by weight, based on total weight of the ethylenically unsaturated composition.

12. The PMPO of one of claim 1 to claim 11, wherein the ethylenically unsaturated composition further comprises styrene and acrylonitrile that are present in a weight ratio of styrene to acrylonitrile (S:AN) of 80:20 to 20:80.

13. The PMPO of claim 12, wherein the sum of the amount of styrene and acrylonitrile is 90 to 99.9% by weight, based on total weight of the ethylenically unsaturated composition.

14. A polymer polyol (PMPO) comprising:
(a) a base polyol having a functionality of 2 to 8 and an OH number of 20 to 400 mg KOH/g polyol; and
(b) polymer particles dispersed in the base polyol,
wherein the polymer particles comprise a reaction product of a reaction mixture comprising an ethylenically unsaturated composition, the ethylenically unsaturated composition comprising an ethylenically unsaturated compound that comprises a reaction product of reactants comprising:
(i) an amino alkyl urea having a tertiary amino group and a primary amino group; and
(ii) an ethylenically unsaturated compound comprising a primary amine-reactive group.

15. The PMPO of claim 14, wherein:
(1) the amino alkyl urea having a tertiary amino group and a primary amino group comprises a compound of the structure: 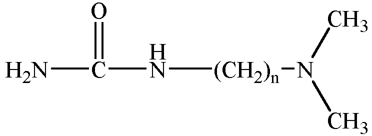 in which n is 2 or 3; and
(2) the ethylenically unsaturated compound comprising a primary amine-reactive group comprises an isocyanate-functional ethylenically unsaturated compound.
